# EUROPEAN PATENT APPLICATION

(11) **EP 4 760 814 A1**
(43) Date of publication of application: **17.06.2026**
(21) Application number: 24885412.7
(22) Date of filing: 11.10.2024
(51) Int. Cl.: H01M 4/525, H01B 1/06, H01B 1/08, H01M 4/13, H01M 4/36, H01M 4/505, H01M 10/052

(54) **CERAMIC COMPOSITE PARTICLES AND SECONDARY BATTERY USING SAME**

(30) Priority: 31.10.2023 JP 2023186672
(71) Applicant: DENSO CORPORATION, Kariya-city, Aichi 448-8661 (JP)
(72) Inventor: SHIMONISHI, Yuta, Kariya- city, Aichi 4488661 (JP); ONODERA, Hitoshi, Kariya- city, Aichi 4488661 (JP); YOSHIDA, Shuhei, Kariya- city, Aichi 4488661 (JP)
(74) Representative: TBK
(86) International application number: PCT/JP2024/036395
(87) International publication number: WO 2025/094637

(57) **Abstract**

A ceramic composite particle includes a ceramic particle (141) and a coating layer (142) that covers at least a part of a surface of the ceramic particle and contains two or more phases. The coating layer contains a first phase (142a) composed of an oxide-based ion conductor and a second phase (142b) composed of an amorphous-phase-containing ion conductor containing an amorphous phase. The first phase has higher ionic conductivity than that of the second phase. The second phase has a lower Young's modulus than that of the first phase.

## Description

### CROSS REFERENCE TO RELATED APPLICATION

This application is based on Japanese Patent Application No. 2023-186672 filed on October 31, 2023, the disclosure of which is incorporated herein by reference.

### TECHNICAL FIELD

The present disclosure relates to ceramic composite particles and a secondary battery using the same.

### BACKGROUND ART

Patent Literature 1 discloses that a coating layer containing lithium niobate (LiNbO₃) is formed on a surface of a positive electrode active substance composed of oxide-based ceramic particles to suppress reactions between the oxide-based ceramic particles and a sulfide-based solid electrolyte.

### PRIOR ART LITERATURES

### PATENT LITERATURE

Patent Literature 1: JP 6380221 B

### SUMMARY OF INVENTION

However, the lithium niobate (LiNbO₃) used in the coating layer in Patent Literature 1 has low ionic conductivity, and thus the resistance of the coating layer increases, the ionic conductivity decreases, and the battery performance decreases.

In view of the above points, an object of the present disclosure is to improve, in a ceramic composite particle in which a ceramic particle is coated with a coating layer having ion-conductive property, an ionic conductivity of the coating layer while suppressing the ceramic particle from reacting with other materials.

In order to achieve the above object, a ceramic composite particle according to one aspect of the present disclosure includes a ceramic particle and a coating layer that covers at least a part of a surface of the ceramic particle and contains two or more phases. The coating layer contains a first phase composed of an oxide-based ion conductor and a second phase composed of an amorphous-phase-containing ion conductor containing an amorphous phase. The first phase has an ionic conductivity higher than an ionic conductivity of the second phase. The second phase has a Young's modulus lower than a Young's modulus of the first phase.

Since the second phase containing the amorphous phase has a low Young's modulus and is structurally disordered, a contact property between the ceramic particle and the coating layer can be improved, and a coverage of a positive electrode active substance by the coating layer can be improved. This makes it possible to improve an ionic conductivity of the coating layer by the first phase having a high ionic conductivity while suppressing the ceramic particle from reacting with other materials.

### BRIEF DESCRIPTION OF DRAWINGS

FIG. 1 is a cross-sectional view illustrating a configuration of a secondary battery according to a first embodiment.
FIG. 2 is perspective views illustrating specific examples of a negative electrode structure.
FIG. 3 is perspective views illustrating specific examples of the negative electrode structure.
FIG. 4 is a perspective view illustrating a specific example of a negative electrode structure.
FIG. 5 is a view illustrating negative electrode side particles.
FIG. 6 is views illustrating specific examples of a positive electrode active substance and a coating layer.
FIG. 7 is views illustrating specific examples of a positive electrode active substance and a coating layer.
FIG. 8 is a view illustrating a specific example of a positive electrode active substance and a coating layer.
FIG. 9 is views illustrating specific examples of a solid electrolyte composite.
FIG. 10 is a view illustrating a crystal structure of a pyrochlore-type oxide.
FIG. 11 is a view illustrating a production process of the pyrochlore-type oxide.
FIG. 12 is SEM images of the pyrochlore-type oxide and amorphous-phase-containing LiF.
FIG. 13 is an SEM image of a positive electrode active substance and a coating layer.
FIG. 14 is a flowchart illustrating a method for producing a negative electrode structure by a stereolithography 3D printer.
FIG. 15 is a flowchart illustrating a method for producing a negative electrode structure by an extrusion 3D printer.
FIG. 16 is SEM images of a negative electrode structure.
FIG. 17 is a diagram showing examples and comparative examples of negative electrode structures.
FIG. 18 is a diagram showing examples and comparative examples of positive electrode active substances.
FIG. 19 is a view illustrating a negative electrode structure of a second embodiment.
FIG. 20 is a view illustrating a negative electrode structure of a third embodiment.
FIG. 21 is a view illustrating a negative electrode structure of a fourth embodiment.
FIG. 22 is a cross-sectional view illustrating a configuration of a secondary battery according to a fifth embodiment.
FIG. 23 is views illustrating specific examples of a solid electrolyte composite provided on a positive electrode of the fifth embodiment.

### DESCRIPTION OF EMBODIMENTS

Hereinafter, a plurality of forms for carrying out the present disclosure will be described with reference to the drawings. In each form, the same reference numerals are given to portions corresponding to the matters described in the preceding forms, and redundant description may be omitted. In a case where only a part of a configuration is described in each form, other forms described above can be applied to other parts of the configuration. Not only the combinations explicitly indicated as being possible among the respective embodiments, but also partial combinations of the embodiments themselves may be adopted, even if not expressly stated, as long as no impediment arises to such combinations.

### (First Embodiment)

Hereinafter, an embodiment in which a pyrochlore-type oxide of the present disclosure is applied to a solid electrolyte for a secondary battery will be described with reference to the drawings. A secondary battery 10 of the present embodiment is a lithium ion battery in which lithium ions conduct as conducting ions.

The secondary battery 10 of the present embodiment is an all-solid-state battery using a solid electrolyte for a solid electrolyte layer 15, and is an anode-free battery in which a negative electrode active substance is not provided in a negative electrode layer 12 in the initial state. The secondary battery 10 of the present embodiment is a battery cell, and is used in a stack in which a plurality of the secondary batteries 10 are connected, as necessary.

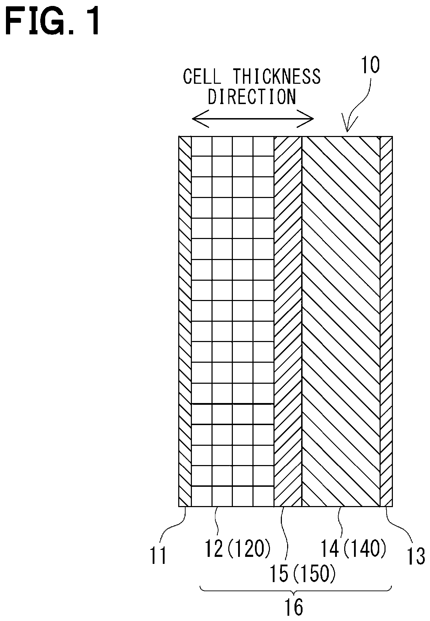

As illustrated in FIG. 1, the secondary battery 10 includes a negative electrode current collector 11, the negative electrode layer 12, a positive electrode current collector 13, a positive electrode layer 14, and the solid electrolyte layer 15 as constituent elements. These constituent elements 11 to 15 are laminated in a cell thickness direction. In FIG. 1, the left-right direction in the drawing represents the cell thickness direction.

The solid electrolyte layer 15 is sandwiched between a pair of the electrode layers 12 and 14. The solid electrolyte layer 15 and the pair of the electrode layers 12 and 14 constitute an electrode structure 16. One of the pair of the electrode layers 12 and 14 is the negative electrode layer 12, and the other is the positive electrode layer 14. The negative electrode layer 12 is provided on one surface of the solid electrolyte layer 15, and the positive electrode layer 14 is provided on the other surface of the solid electrolyte layer 15.

The negative electrode layer 12 and the solid electrolyte layer 15 are in contact with each other, and the positive electrode layer 14 and the solid electrolyte layer 15 are in contact with each other. The negative electrode layer 12 and the positive electrode layer 14 are connected via the solid electrolyte layer 15. The secondary battery 10 is charged and discharged by lithium ions conducting between the negative electrode layer 12 and the positive electrode layer 14 via the solid electrolyte layer 15.

A laminate including the negative electrode layer 12, the positive electrode layer 14, and the solid electrolyte layer 15 is provided between the negative electrode current collector 11 and the positive electrode current collector 13. The negative electrode current collector 11 and the negative electrode layer 12 are in contact with each other. The positive electrode current collector 13 and the positive electrode layer 14 are in contact with each other. The negative electrode current collector 11 and the positive electrode current collector 13 are connected via the laminate.

For the negative electrode current collector 11 and the positive electrode current collector 13, any material that can be used as a current collector for a lithium ion battery can be used. In the present embodiment, Cu is used as the negative electrode current collector 11, and Al is used as the positive electrode current collector 13.

The negative electrode layer 12 is a structure constituting the negative electrode, which receives lithium ions when the secondary battery 10 is charged and releases lithium ions when the secondary battery 10 is discharged. The negative electrode layer 12 is an ion-conductive structure having ion-conductive property.

The negative electrode layer 12 is configured as a porous body having a large number of pores, and the negative electrode layer 12 can be referred to as a porous layer. The secondary battery 10 of the present embodiment is an anode-free battery, and in the initial state, the negative electrode layer 12 has no negative electrode active substance. The initial state is a state in which each constituent element of the secondary battery 10 is assembled, and is a state in which the secondary battery 10 is not charged. In the negative electrode layer 12, elements constituting the conducting ions are precipitated when the secondary battery 10 is charged. Specifically, when the secondary battery 10 is charged, lithium ions released from the positive electrode active substance conduct from the positive electrode layer 14 to the negative electrode layer 12, and lithium metal is precipitated in the pores of the negative electrode layer 12. The lithium metal precipitated in the pores of the negative electrode layer 12 functions as the negative electrode active substance. When the secondary battery 10 is charged and discharged, a precipitation/dissolution reaction of the lithium metal as the negative electrode active substance occurs in the pores of the negative electrode layer 12, and the lithium ions are received or released.

The negative electrode layer 12 has a three-dimensional structure. The negative electrode layer 12 can have an ordered porous structure in which pores are regularly formed or a disordered porous structure in which pores are irregularly formed. The ordered porous structure includes an aspect in which a large number of pores having the same shape are formed and the pore diameters are uniform, and an aspect in which pores having different shapes or different pore diameters are regularly arranged and the pore distribution is regular. The disordered porous structure includes an aspect in which a large number of pores having different shapes are formed and the pore diameters are not uniform, and an aspect in which the pore distribution is irregular because pores are randomly arranged even if the pore diameters are uniform, and the like.

In the ordered porous structure, the precipitation/dissolution reaction of the lithium metal uniformly occurs. Therefore, the negative electrode layer 12 having the ordered porous structure can suppress the lithium metal from being precipitated in a locally concentrated area as much as possible, and can reduce the possibility of occurrence of a short circuit.

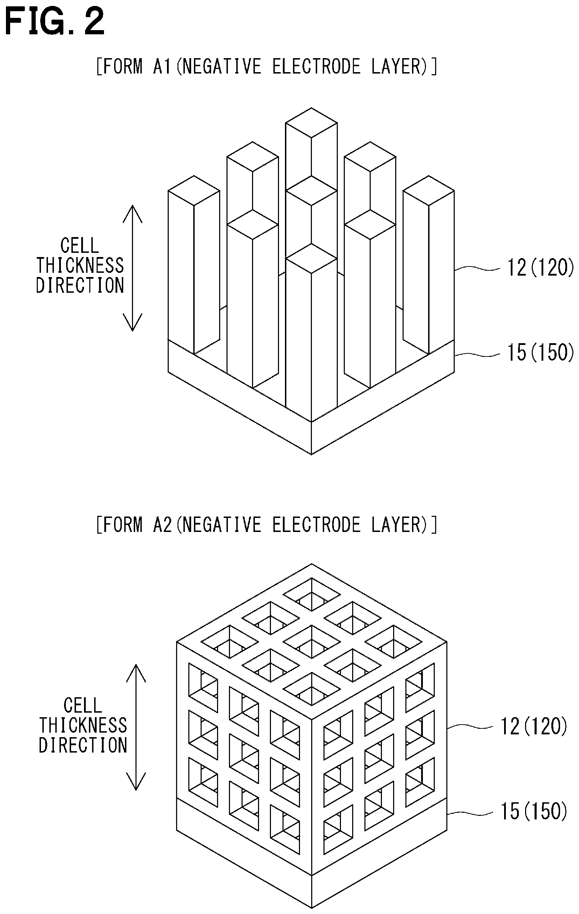

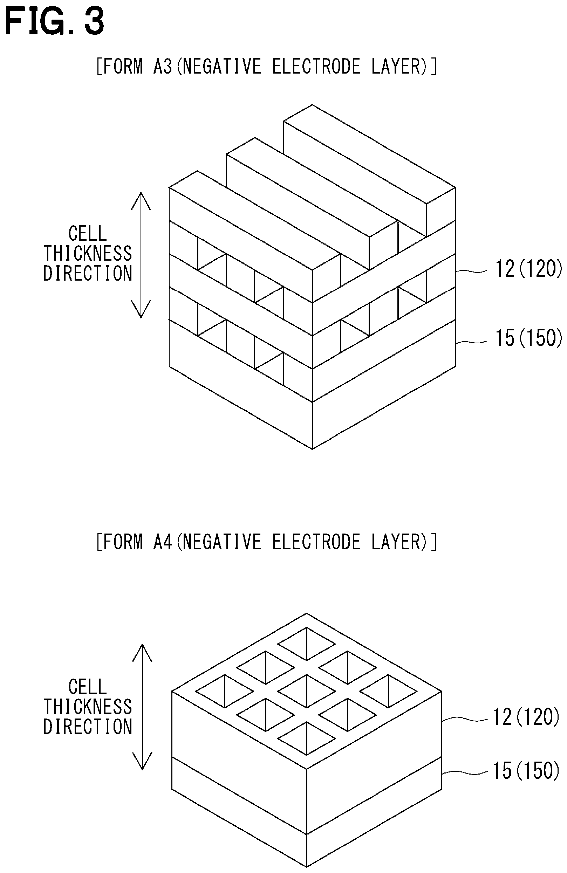

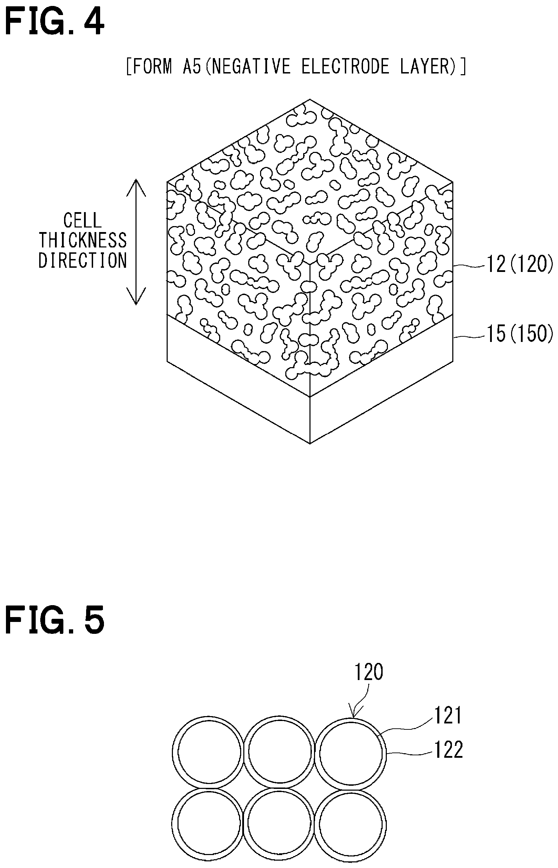

Forms A1 to A4 in FIGS. 2 and 3 illustrate specific examples of the negative electrode layer 12 having the ordered porous structure. A form A5 in FIG. 4 illustrates a specific example of the negative electrode layer 12 having the disordered porous structure. In FIGS. 2 to 4, the up-down direction in the figures represents the cell thickness direction. Although not illustrated in FIGS. 2 to 4, the negative electrode current collector 11 is provided on the upper side of the negative electrode layer 12.

The ordered porous structures of the forms A1 to A4 and the disordered porous structure of the form A5 can be produced using, for example, a 3D printer. In the ordered porous structures of the forms A1 to A4, a structure in which pores are regularly formed is obtained by regularly molding a structure having a predetermined shape. In the disordered porous structure of the form A5, a structure in which pores are irregularly formed is obtained by being molded using, for example, a raw material mixed with a pore-forming agent, and removing the pore-forming agent by sintering.

Here, features of each of the ordered porous structures of the forms A1 to A4 will be described. The negative electrode layer 12 having the ordered porous structure can adopt various forms, and is not limited to the forms A1 to A4.

In the negative electrode layer 12 of the form A1, a plurality of columnar structures are arranged in parallel. The negative electrode layer 12 of the form A1 is formed in parallel to the cell thickness direction. The negative electrode layer 12 of the form A1 is linearly formed so as to connect the solid electrolyte layer 15 and the negative electrode current collector 11, and the plurality of columnar structures constitute an ion conduction pathway. The lithium ions conduct in the cell thickness direction inside the secondary battery 10. Therefore, according to the negative electrode layer 12 of the form A1, ionic conductivity can be improved. In addition, in the negative electrode layer 12 of the form A1, the bending degree of the plurality of columnar structures can be reduced, and an ion conduction loss, due to the fact that the columnar structures are bent and the ion conduction pathway becomes complicated, can be reduced. As a result, the ion-conductive property can be improved, and the input/output performance of the secondary battery 10 can be improved.

The negative electrode layer 12 of the form A2 has a three-dimensional lattice structure, and a plurality of columnar structures intersect to form the three-dimensional lattice structure. In the negative electrode layer 12 of the form A2, structures are formed not only in the direction parallel to the cell thickness direction but also in the direction orthogonal to the cell thickness direction, and strength can be improved more than that of the negative electrode layer 12 of the form A1.

The negative electrode layer 12 of the form A3 has a parallel cross structure in which a plurality of layers composed of a plurality of columnar structures arranged in parallel are laminated in the cell thickness direction. In layers of the adjacent columnar structures, a plurality of columnar structures are arranged orthogonally. In the negative electrode layer 12 of the form A3, structures are formed not only in the direction parallel to the cell thickness direction but also in the direction orthogonal to the cell thickness direction, and strength can be improved more than that of the negative electrode layer 12 of the form A1. Furthermore, the negative electrode layer 12 of the form A3 can be formed by sequentially laminating layers composed of the plurality of columnar structures arranged in parallel, and moldability can be improved more than that of the negative electrode layer 12 of the form A2.

The negative electrode layer 12 of the form A4 has a planar lattice structure in which a plurality of columnar structures intersect to form a two-dimensional lattice structure. The negative electrode layer 12 of the form A4 can also improve strength more than that of the negative electrode layer 12 of the form A1.

The negative electrode layer 12 desirably has a pore diameter within the range of 0.1 to 50 µm. In addition, the negative electrode layer 12 desirably has a build width of the structure forming the pores, within the range of 1 to 100 µm. The build width of the negative electrode layer 12 is the interval between the adjacent pores.

As illustrated in FIG. 5, the negative electrode layer 12 includes a sintered body obtained by sintering negative electrode composite particles 120 having ion-conductive property, as a main constituent element. The negative electrode layer 12 may contain a conductive additive and a binder. Furthermore, the negative electrode layer 12 may contain an electrolyte solution or a polymer.

The negative electrode composite particle 120 is a composite particle composed of a core phase 121 and a shell phase 122. The core phase 121 is formed in a particulate shape, and the shell phase 122 is formed so as to cover at least a part of the core phase 121. The shell phase 122 may cover the entire surface of the core phase 121, or may cover a part of the core phase 121. The core phase 121 is an oxide-based ion conductor, and the shell phase 122 is an amorphous-phase-containing ion conductor containing an amorphous phase at least in part.

The negative electrode layer 12 is produced by sintering a slurry in which the negative electrode composite particles 120 are dispersed in a solvent. The oxide-based ion conductor of the core phase 121 reacts with the solvent in the slurry, and lithium ions, as conducting ions, are easily eluted from the oxide-based ion conductor.

The shell phase 122 of the negative electrode composite particle 120 is provided to suppress the reaction between the oxide-based ion conductor of the core phase 121 and the solvent in the slurry and to suppress elution of lithium ions from the oxide-based ion conductor. In order to suppress the reaction between the core phase 121 and the solvent in the slurry, it is desirable that the coverage of the core phase 121 by the shell phase 122 is high.

When the oxide-based ion conductor is subjected to organic coating, the specific surface area increases, the solid content in the slurry decreases, and the density of the structure after sintering decreases. On the other hand, the shell phase 122 of the present embodiment promotes interparticle bonding during the sintering, and can increase the density after sintering.

If the solid component ratio in the slurry is too low, the density of the negative electrode layer 12 after sintering decreases. On the other hand, if the solid component in the slurry is too high, there is a risk that the slurry cannot be created even when the negative electrode composite particles 120 and the solvent are mixed and stirred. Therefore, in order to reliably disperse the negative electrode composite particles 120 into a slurry and to increase the density of the negative electrode layer 12 after sintering, it is desirable to set the solid component ratio in the slurry to be within the range of 30 to 60 vol%.

When the negative electrode layer 12 is produced by a stereolithography 3D printer for irradiating a slurry with a laser, it is desirable to contain a light absorbing material having a lower light transmittance than that of the negative electrode composite particle 120 in the slurry. The light absorbing material is a material having a higher absorbance than that of the negative electrode composite particle 120. As the light absorbing material, a conductive additive composed of, for example, a carbon material can be used. As the light absorbing material, a constituent material of the negative electrode layer 12, such as a conductive additive, is used, whereby the constituent material of the negative electrode layer 12 can also serve as the light absorbing material, and thus no separate light absorbing material needs to be provided.

When the light absorbing material is contained in the slurry, scattering of laser light, possibly occurring when the slurry is irradiated with laser by a 3D printer, can be suppressed. Therefore, the intended build width can be achieved by a stereolithography 3D printer, and building can be performed with high accuracy.

The constituent material of the core phase 121 and the constituent material of the shell phase 122 are ion-conductive substances having different chemical compositions from each other. The constituent material of the core phase 121 has a higher ionic conductivity value than that of the constituent material of the shell phase 122. Therefore, in order to increase the ionic conductivity value of the negative electrode composite particle 120, the volume ratio of the core phase 121 in the negative electrode composite particle 120 is set to be equal to or higher than the volume ratio of the shell phase 122 in the present embodiment.

The core phase 121 is an oxide-based ion conductor and is an oxide-based solid electrolyte. As the core phase 121, for example, a pyrochlore-type oxide, a garnet-type oxide, or the like can be used. As the pyrochlore-type oxide, for example, Li_{1.25}La_{0.58}Nb₂O₆F(LLNOF) or Li_{1.25}La_{0.58}Ta₂O₆(LLTOF) can be used. As the garnet-type oxide, for example, Li₇La₃Zr₂O₁₂(LLZ) can be used. LLNOF and LLTOF have higher ion-conductive properties, lower melting points, and lower Young's moduli than those of LLZ. Furthermore, LLNOF and LLTOF contain less lithium in their structures than LLZ, and thus they are less likely to react with the solvent in the slurry.

The constituent material of the shell phase 122 contains at least Li and F, and examples thereof include LiF and LiNb₆O₁₅F. In the present embodiment, LiF is used as the shell phase 122.

The constituent material of the shell phase 122 has a lower melting point than that of the constituent material of the core phase 121. Therefore, by heating the negative electrode composite particle 120 at a temperature equal to or higher than the melting point of the constituent material of the shell phase 122 and lower than the melting point of the constituent material of the core phase 121 during the production of the negative electrode composite particle, the shell phase 122 is melted, and the coverage of the core phase 121 by the shell phase 122 can be improved.

The constituent material of the shell phase 122 has a lower Young's modulus than that of the constituent material of the core phase 121. For example, the Young's modulus of Li_{1.25}La_{0.58}Nb₂O₆F used as the core phase 121 is about 100 GPa, and the Young's modulus of LiF of the crystal phase is about 50 to 70 GPa. By using a material having a low Young's modulus for the shell phase 122, the contact area between the shell phase 122 and the core phase 121 can be improved, and the coverage of the core phase 121 by the shell phase 122 can be improved.

The constituent material of the shell phase 122 is an amorphous-phase-containing ion conductor containing an amorphous phase at least in part. The constituent material of the shell phase 122 may be an amorphous phase as a whole or a mixture of an amorphous phase and crystals. When the constituent material of the shell phase 122 contains an amorphous phase and a crystal phase, the volume ratio of the amorphous phase is desirably equal to or higher than the volume ratio of the crystal phase.

The amorphous phase has a lower Young's modulus than that of the crystal phase. Therefore, when the volume ratio of the amorphous phase in the shell phase 122 is higher, the contact area between the shell phase 122 and the core phase 121 can be improved, and the coverage of the core phase 121 by the shell phase 122 can be improved.

In the amorphous phase, the particle shape is not a specific shape but is structurally disordered. This also makes it possible to improve the contact area between the shell phase 122 and the core phase 121 and to improve the coverage of the core phase 121 by the shell phase 122.

The positive electrode layer 14 releases lithium ions while the secondary battery 10 is charged, and receives lithium ions while the secondary battery 10 is discharged. The positive electrode layer 14 contains positive electrode composite particles 140. The positive electrode layer 14 may contain a conductive additive and a binder. The positive electrode layer 14 may contain an electrolyte solution and a polymer in addition to the positive electrode composite particles 140.

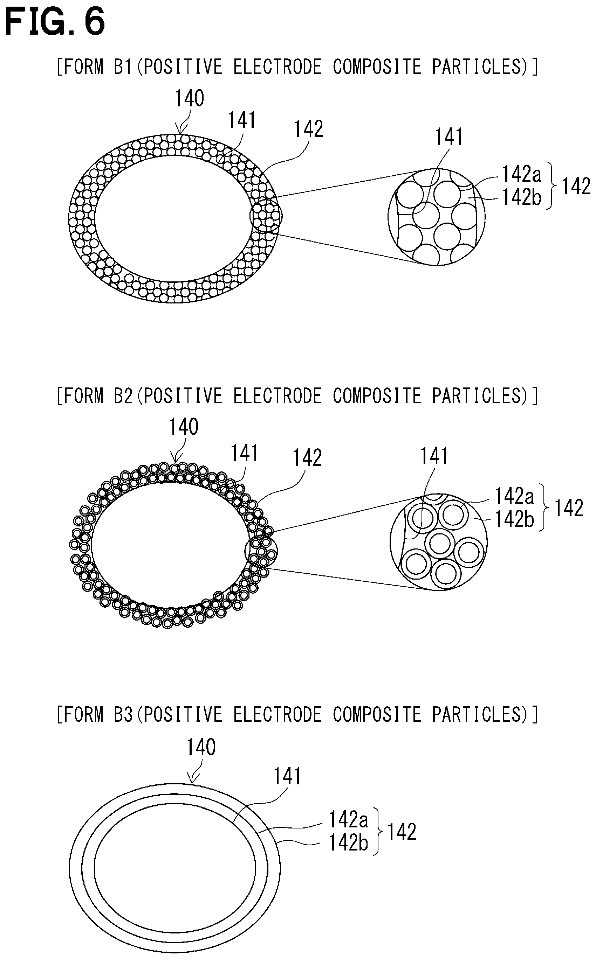

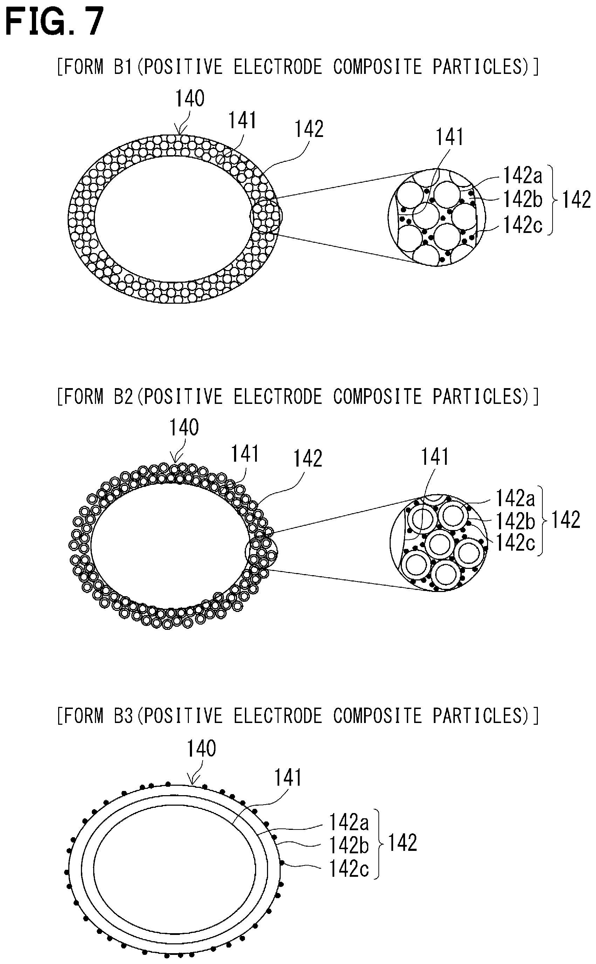

FIGS. 6 and 7 illustrate specific examples of the positive electrode composite particles 140. FIG. 6 illustrates aspects in which a coating layer 142 contains a first phase 142a and a second phase 142b. FIG. 7 illustrates aspects in which the coating layer 142 contains the first phase 142a, the second phase 142b, and a third phase 142c.

As illustrated in FIGS. 6 and 7, the positive electrode composite particle 140 is a ceramic composite particle containing a positive electrode active substance 141 and a coating layer 142 covering the positive electrode active substance 141. The positive electrode active substance 141 is a ceramic particle that undergoes a redox reaction, and releases or receives lithium ions as conducting ions by the redox reaction. The coating layer 142 has two or more phases.

As the positive electrode active substance 141, for example, a layered rock-salt-type active substance, an olivine-type active substance, a spinel-type active substance, or an oxyhalide-based active substance can be used. As the layered rock-salt-type active substance, for example, a ternary positive electrode material, such as LiNiₓMn_{y}Co_{z}O₂(NMC) or LiNiₓCo_{y}Al_{z}O₂(NCA), can be used. As the olivine-type active substance, for example, LiFePO₄(LFP), LiMnₓFe₁₋ₓPO₄(LMFP), LiMnPO₄(LMP), LiCoPO₄(LCP), or LiNiPO₄(LNP) can be used. As the spinel-type active substance, for example, LiMn₂O₄(LMO) or LiNi_{0.5}Mn_{1.5}O₄(LNMO) can be used. As the oxyhalide-based active substance, for example, Li₂MnO_{3 - x}Fₓ can be used.

The coating layer 142 covers at least a part of the positive electrode active substance 141. The coating layer 142 is provided to suppress the positive electrode active substance 141 from coming into contact with and reacting with other materials such as the solid electrolyte of the solid electrolyte layer 15. The coating layer 142 contains two or more phases composed of different ion conductors. The coating layer 142 contains the first phase 142a composed of an oxide-based ion conductor and the second phase 142b composed of an amorphous-phase-containing ion conductor containing an amorphous phase at least in part.

The coating layer 142 may cover the entire surface of the positive electrode active substance 141 or may cover a part of the positive electrode active substance 141. In order to suppress the positive electrode active substance 141 from coming into contact with and reacting with the solid electrolyte layer 15 or the like, the coverage of the positive electrode active substance 141 by the coating layer 142 is desirably as high as possible. In the present embodiment, the coverage of the positive electrode active substance 141 by the coating layer 142 is set to 70% or higher.

In the positive electrode layer 14, it is desirable that the volume ratio of the positive electrode active substance 141 is as high as possible from the viewpoint of battery capacity. On the other hand, if the volume ratio of the coating layer 142 is low, the coverage of the positive electrode active substance 141 by the coating layer 142 decreases. In the present embodiment, the volume ratio of the coating layer 142 to the positive electrode active substance 141 is set to be within the range of 5 to 50%.

In order to increase the volume ratio of the positive electrode active substance 141, the thickness of the coating layer 142 is desirably as thin as possible. On the other hand, if the thickness of the coating layer 142 is thin, the coverage of the positive electrode active substance 141 by the coating layer 142 decreases. In the present embodiment, the thickness of the coating layer 142 is set to be within the range of 1 to 100 nm.

The coating layer 142 has a plurality of phases including at least the first phase 142a and the second phase 142b. In forms B1 to B3 illustrated in FIG. 6, the configurations of the first phase 142a and the second phase 142b in the coating layer 142 are different from each other. Note that the first phase 142a and the second phase 142b in the coating layer 142 are not limited to the configurations illustrated in the forms B1 to B3 in FIG. 6.

The constituent material of the first phase 142a and the constituent material of the second phase 142b are ion-conductive substances having different chemical compositions from each other. The constituent material of the second phase 142b has a lower ionic conductivity value than that of the constituent material of the first phase 142a. Therefore, in order to secure the ionic conductivity of the coating layer 142, it is desirable that, in the coating layer 142, the volume ratio of the first phase 142a is equal to or higher than the volume ratio of the second phase 142b.

The coating layer 142 of the form B1 has a random structure in which the first phase 142a and the second phase 142b are randomly mixed. The first phase 142a of the form B1 is particulate, and the periphery of the first phase 142a is covered by the second phase 142b.

The coating layer 142 of the form B2 has a core-shell structure in which the outer surface of the first phase 142a, which is particulate and serves as a core, is covered by the second phase 142b that serves as a shell. In the form B2, core-shell particles are formed in which the first phases 142a in a particulate shape are individually covered by the second phases 142b.

The coating layer 142 of the form B3 has a laminated structure in which the first phase 142a and the second phase 142b are formed in layers. In the form B3, the outer surface of the positive electrode active substance 141 is covered by the second phase 142b, and the outer surface of the second phase 142b is covered by the first phase 142a. That is, in the form B3, the second phase 142b and the first phase 142a are laminated in this order on the outer surface of the positive electrode active substance 141.

In the positive electrode composite particle 140, the coating layer 142 can be coated on the positive electrode active substance 141 by, for example, a mechanochemical process that mixes the raw materials while applying compressive and shear forces.

The form B1 can be produced by using the positive electrode active substance 141, the first phase 142a, and the second phase 142b as starting substances and mixing them while applying compressive and shear forces. The form B2 can be produced by using the positive electrode active substance 141 and core-shell particles in which the first phase 142a is covered by the second phase 142b as starting substances, and mixing them while applying compressive and shear forces.

The form B3 can be produced by using the positive electrode active substance 141 and the second phase 142b as starting substances, mixing them while applying compressive and shear forces to produce composite particles, and mixing the composite particles and the first phase 142a while applying compressive and shear forces.

In the case of coating by the mechanochemical process, it is desirable that there is a significant difference in size between the coating particles constituting the coating layer 142 and the particles to be coated constituting the positive electrode active substance 141. Specifically, it is desirable that the coating particles have a particle diameter of 1/10 or less of the particles to be coated.

Since the positive electrode active substance 141, which is the particle to be coated, is generally within the range of 1 to 10 µm, the coating particle needs to be 1 µm or less at most. However, when the coating particles of 1 µm are used, the thickness of the coating layer 142 increases, leading to an increase in resistance. Therefore, in order to form the coating layer 142 of 100 nm or less, the coating particles are more desirably 100 nm or less.

The coating layer 142 can also be coated on the positive electrode active substance 141 by a process such as a uniaxial ball mill or a planetary ball mill.

The coating layer 142 can also be coated on the positive electrode active substance 141 by liquid phase coating or vapor phase coating.

In the liquid phase coating, the precursor solution of the coating layer 142 is prepared, the surface of the positive electrode active substance 141 is coated with the precursor solution of a reaction-inhibiting layer, dried, and then heat-treated to form the reaction-inhibiting layer. The coating of the precursor on the positive electrode active substance 141 may be performed by any process capable of coating the powder of the positive electrode active substance 141 with a solution, and can be performed using, for example, a tumbling fluidized coating apparatus.

For the vapor phase coating, for example, a chemical vapor deposition process (CVD), an atomic layer deposition process (ALD), a sputtering process, or the like can be used.

In any of the forms B1 to B3, the second phase 142b is interposed between the positive electrode active substance 141 and the first phase 142a, and the contact area between the positive electrode active substance 141 and the coating layer 142 is improved by the second phase 142b.

For the first phase 142a of the coating layer 142, the same material as the core phase 121 of the negative electrode composite particle 120 can be used. For the second phase 142b of the coating layer 142, the same material as the shell phase 122 of the negative electrode composite particle 120 can be used.

The first phase 142a is an oxide-based ion conductor and is an oxide-based solid electrolyte. As the first phase 142a, for example, a pyrochlore-type oxide, a garnet-type oxide, or the like can be used. As the pyrochlore-type oxide, for example, Li_{1.25}La_{0.58}Nb₂O₆F(LLNOF) or Li_{1.25}La_{0.58}Ta₂O₆(LLTOF) can be used. As the garnet-type oxide, for example, Li₇La₃Zr₂O₁₂(LLZ) can be used.

The constituent material of the second phase 142b contains at least Li and F in its composition, and examples thereof include LiF and LiNb₆O₁₅F. Since the constituent material of the second phase 142b contains at least Li and F in its composition, a low Young's modulus can be obtained. In the present embodiment, LiF is used as the second phase 142b.

The constituent material of the second phase 142b is a material having a lower melting point than that of the constituent material of the first phase 142a. Therefore, by heating the positive electrode composite particle 140 at a temperature equal to or higher than the melting point of the constituent material of the second phase 142b and lower than the melting point of the constituent material of the first phase 142a during the production of the positive electrode composite particle, the second phase 142b is melted, and the contact area between the first phase 142a and the second phase 142b can be improved.

The constituent material of the second phase 142b is a material having a lower Young's modulus than that of the constituent material of the first phase 142a. By using a material having a low Young's modulus for the second phase 142b, the contact area between the second phase 142b and the positive electrode active substance 141 and the contact area between the second phase 142b and the first phase 142a can be improved. As a result, the coverage of the positive electrode active substance 141 by the coating layer 142 can be improved.

The constituent material of the second phase 142b is an amorphous-phase-containing ion conductor containing an amorphous phase at least in part. The constituent material of the second phase 142b may be an amorphous phase as a whole or a mixture of an amorphous phase and a crystal phase. When the constituent material of the second phase 142b contains an amorphous phase and a crystal phase, the volume ratio of the amorphous phase is desirably equal to or higher than the volume ratio of the crystal phase.

The amorphous phase has a lower Young's modulus than that of the crystal phase. Therefore, since the volume ratio of the amorphous phase in the second phase 142b is high, the contact area between the second phase 142b and the positive electrode active substance 141 and the contact area between the second phase 142b and the first phase 142a can be improved. As a result, the coverage of the positive electrode active substance 141 by the coating layer 142 can be improved.

In the amorphous phase, the particle shape is not a specific shape but is structurally disordered. This also makes it possible to improve the contact area between the second phase 142b and the positive electrode active substance 141 and the contact area between the second phase 142b and the first phase 142a. As a result, the coverage of the positive electrode active substance 141 by the coating layer 142 can be improved.

As illustrated in FIG. 7, the coating layer 142 may contain a third phase 142c having electron-conductive property in addition to the first phase 142a and the second phase 142b having ion-conductive properties. In the forms B1 to B3 illustrated in FIG. 7, the configurations of the first phase 142a, the second phase 142b, and the third phase 142c in the coating layer 142 are different from each other. Note that the first phase 142a, the second phase 142b, and the third phase 142c in the coating layer 142 are not limited to the configurations illustrated in the forms B1 to B3 in FIG. 7.

As the constituent material of the third phase 142c, for example, a carbon material, such as carbon black, can be used. When the coating layer 142 is provided with the third phase 142c having electron-conductive property, the electron-conductivity property of the positive electrode layer 14 can be improved, and the amount of the conductive additive in the positive electrode layer 14 can be reduced.

FIGS. 6 and 7 illustrate examples in which the second phase 142b covers the entire outer surface of the first phase 142a in the coating layer 142, but the second phase 142b does not necessarily need to cover the entire outer surface of the first phase 142a.

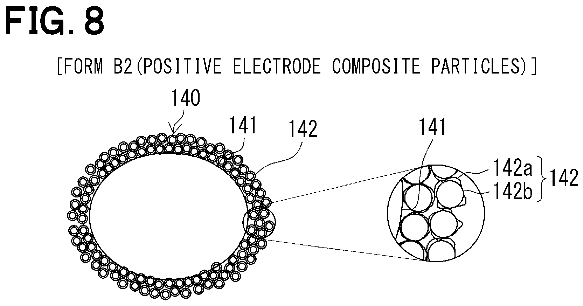

FIG. 8 illustrates an example in which the second phase 142b covers a part of the outer surface of the first phase 142a in the coating layer 142 contained in the positive electrode composite particle 140 of the form B2. As illustrated above, the second phase 142b may cover at least a part of the outer surface of the first phase 142a in the coating layer 142.

The solid electrolyte layer 15 has ion-conductive property, and can move lithium ions between the negative electrode layer 12 and the positive electrode layer 14. The solid electrolyte layer 15 contains a solid electrolyte composite 150. The solid electrolyte layer 15 may contain a binder. Furthermore, the solid electrolyte layer 15 may contain an electrolyte solution or a polymer. The solid electrolyte layer 15 has a higher density than that of the negative electrode layer 12, which is a porous layer. Therefore, the solid electrolyte layer 15 can be referred to as a dense layer.

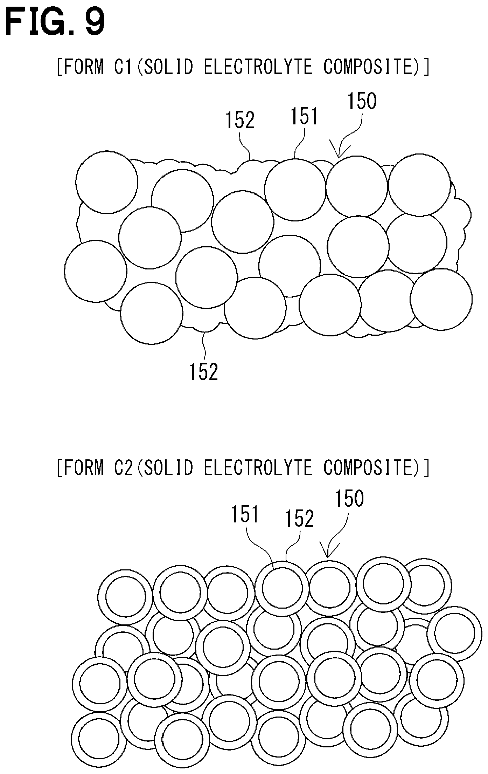

As illustrated in FIG. 9, the solid electrolyte composite 150 is a composite having a plurality of phases including at least a first phase 151 and a second phase 152. The first phase 151 is an oxide-based ion conductor and is a solid electrolyte. The second phase 152 is an amorphous-phase-containing ion conductor containing an amorphous phase at least in part. The second phase 152 is provided to improve the contact area between the solid electrolyte layer 15 and an electrode layer adjacent to the solid electrolyte layer 15, such as the negative electrode layer 12 or the positive electrode layer 14, and to reduce interface resistance.

In forms C1 and C2 illustrated in FIG. 9, the configurations of the first phase 151 and the second phase 152 of the solid electrolyte composite 150 are different from each other.

The solid electrolyte composite 150 of the form C1 has a random structure in which the first phase 151 and the second phase 152 are randomly mixed. The first phase 151 of the form C1 is particulate, and the periphery of the first phase 151 is covered by the second phase 152.

The solid electrolyte composite 150 of the form C2 has a core-shell structure in which the particulate first phase 151 is defined as a core phase and the second phase 152 is defined as a shell phase. In the form C2, the particulate first phases 151 are individually covered by the second phases 152. That is, the second phases 152 of the form C2 are not integrated, and the second phases 152 are separated for each first phase 151.

For the first phase 151 of the solid electrolyte composite 150, the same material as the core phase 121 of the negative electrode composite particle 120 can be used. For the second phase 152 of the solid electrolyte composite 150, the same material as the shell phase 122 of the negative electrode composite particle 120 can be used.

The first phase 151 is an oxide-based ion conductor and is an oxide-based solid electrolyte. As the first phase 151, a pyrochlore-type oxide, such as Li_{1.25}La_{0.58}Nb₂O₆F(LLNOF) or Li_{1.25}La_{0.58}Ta₂O₆(LLTOF), can be used.

The constituent material of the second phase 152 contains at least Li and F in its composition, and examples thereof include LiF and LiNb₆O₁₅F. In the present embodiment, LiF is used as the second phase 152.

The constituent material of the second phase 152 is a material having a lower melting point than that of the constituent material of the first phase 151. Therefore, by heating the solid electrolyte composite 150 at a temperature equal to or higher than the melting point of the constituent material of the second phase 152 and lower than the melting point of the constituent material of the first phase 151 during the production of the solid electrolyte composite, the second phase 152 is melted, the contact area between the first phase 151 and the second phase 152 can be improved, and interface resistance can be reduced.

The constituent material of the second phase 152 is a material having a lower Young's modulus than that of the constituent material of the first phase 151. By using a material having a low Young's modulus for the second phase 152, the contact area between the solid electrolyte layer 15 and the adjacent electrode layer can be improved, and interface resistance can be reduced.

The constituent material of the second phase 152 is an amorphous-phase-containing ion conductor containing an amorphous phase at least in part. The constituent material of the second phase 152 may be an amorphous phase as a whole or a mixture of an amorphous phase and a crystal phase. When the constituent material of the second phase 152 contains an amorphous phase and a crystal phase, the volume ratio of the amorphous phase is desirably equal to or higher than the volume ratio of the crystal phase.

The LiF of the amorphous phase has a lower Young's modulus than that of the LiF of the crystal phase. Therefore, by increasing the volume ratio of the amorphous phase in the second phase 152, the contact area between the solid electrolyte layer 15 and the adjacent electrode layer can be improved, and interface resistance can be reduced.

In the amorphous phase, the particle shape is not a specific shape but is structurally disordered. This also makes it possible to improve the contact area between the solid electrolyte layer 15 and the adjacent electrode layer and to reduce interface resistance.

Here, the pyrochlore-type oxide used as the core phase 121 of the negative electrode composite particle 120, the first phase 142a of the coating layer 142 contained in the positive electrode composite particle 140, and the first phase 151 of the solid electrolyte composite 150 will be described.

The pyrochlore-type oxide of the present embodiment has a pyrochlore structure whose composition formula is represented by "Aa_{2-α}Ab_{(1+α)/3}B₂O_{7-β}X_{γ}". In the above composition formula, O represents an oxygen atom, and Aa, Ab, B, and X represent arbitrary elements or groups. Aa, Ab, and B are cations of different types from each other, and O and X are anions of different types from each other. Aa is an alkali metal cation. The pyrochlore-type oxide contains a plurality of cations composed of the alkali metal cation Aa and a plurality of cations Ab and B other than the alkali metal cation Aa in its composition. That is, the pyrochlore-type oxide contains a plurality of cations including the alkali metal cation Aa in its composition.

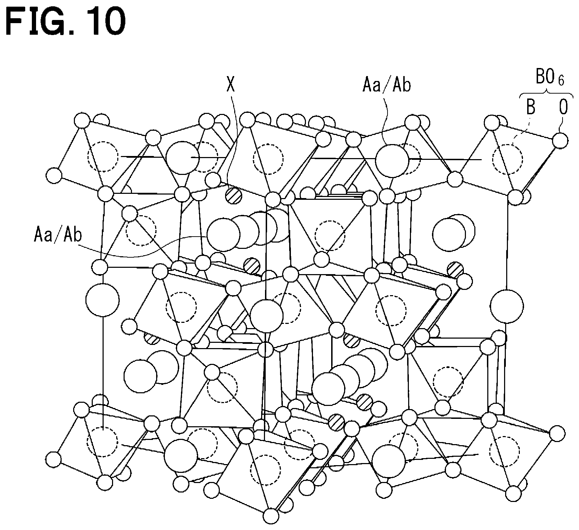

As illustrated in FIG. 10, the pyrochlore-type oxide has a crystal structure in which a three-dimensional network of BO₆ octahedra is formed. In BO₆, O is arranged at an apex with a cation B at the center, and the BO₆ shares the apex with the adjacent BO₆. In the three-dimensional network composed of BO₆, a hexagonal tunnel structure in which cations A and anions X are arranged is formed.

In the above composition formula, 0.6< α<2.0, 0<β≤ 1, and 0<γ≤1. When α changes, the composition ratio between Aa and Ab changes. When β and γ change, the composition ratio between O and X changes.

The cation Aa is an alkali metal cation. As the alkali metal represented by Aa, any one of Li, Na, K, Rb, and Cs can be used. As the cation Aa, Mg or H, other than the alkali metals, may be used. That is, the cation Aa contains at least one selected from the group consisting of Li, Na, K, Rb, Cs, Mg, and H. In the present embodiment, Li is used as Aa. The composition ratio (2-α) of Aa falls within the range of 0<(2-α)<1.4.

The cation Ab contains at least a lanthanoid. As the lanthanoid represented by Ab, at least one of La, Ce, Nd, and Sm can be used. In the present embodiment, La is used as Ab. The composition ratio (1+α)/3 of Ab falls within the range of 0.53<(1+α)/3<1.

The basic configuration of the cation Ab includes the lanthanoid, and a part of the lanthanoid constituting Ab may be replaced by an alkaline earth metal (Ca, Mg, Sr, etc.). In the pyrochlore-type oxide of the present embodiment, it is considered that the inclusion of the lanthanoid in the pyrochlore structure satisfying 0.6<α< 2.0 and 0<β≤1 in the above composition formula causes a defect in the crystal structure, whereby the ionic conductivity value is improved. In the present embodiment, La is used as Ab.

In the pyrochlore-type oxide of the present embodiment, the cation A in the composition formula "A2B2O7" of the general pyrochlore structure is changed to a composite cation using a lithium metal and the lanthanoid. This is considered to contribute to an improvement in the ionic conductivity value of the pyrochlore-type oxide.

The cation B is a metal cation different from Aa and Ab, and is a transition metal or a metal selected from Group 13 to Group 15 elements. B forms an octahedron coordinated by six oxygen atoms in the crystal. As the transition metal represented by B, a Group 4 transition metal or a Group 5 transition metal can be used. More specifically, at least one of Nb, Ta, Ti, Zr, Hf, and V can be used. Al, Ga, or In can be used as a Group 13 element represented by B, Ge or Sn can be used as a Group 14 element, and Sb or Bi can be used as a Group 15 element. In the present embodiment, Nb or Ta is used as B.

The anion X is an anion that can be substituted for the O atom constituting the pyrochlore structure. X is different from the O atom in electronegativity and polarizability. As the anion represented by X, at least one of O, F, Cl, Br, I, S, OH, and P can be used. The composition ratio γ of X is within the range of 0<γ≤1, and at least a part of the O atoms constituting the pyrochlore structure is replaced by X. In the present embodiment, F is used as X.

The pyrochlore-type oxide of the present embodiment has a defect structure in which lattice defects are included in the crystal with some of the O atoms constituting the pyrochlore structure replaced by anions having electronegativity and polarizability different from those of the O atoms. The pyrochlore-type oxide of the present embodiment is considered to have an improved ionic conductivity value because the pyrochlore structure includes the defect structure.

In the pyrochlore-type oxide of the present embodiment, Aa and Ab are partially missing as the defect structure. The composition formula of the general pyrochlore structure is "A₂B₂O₇", and the composition ratio of the cation A is 2. On the other hand, in the pyrochlore-type oxide of the present embodiment, the composition ratios of Aa and Ab are "2-α" and "(1+α)/3", respectively, and 0.6<α<2.0, so that the total of the composition ratios of Aa and Ab is less than 2. That is, in the crystal structure of the pyrochlore-type oxide of the present embodiment, at least a part of either Aa or Ab is missing. The composition ratio corresponding to the missing portions of Aa and Ab is (2α-1)/3.

In addition to the deviation of the composition ratio, a defect structure can also be formed by making the sum of the valences of the cations composed of Aa, Ab, and B and the anions composed of O and X negative in the above composition formula.

In addition, the pyrochlore-type oxide of the present embodiment is a composite anion compound containing a plurality of anions, such as O and X, in the pyrochlore structure, and the BO₆ octahedral coordination structure contains an anion represented by X, so that the alkali metal of Aa can be positioned at the center of the space with the BO₆ octahedral coordination without being close to the BO₆ octahedral coordination. Therefore, it is considered that the pyrochlore-type oxide of the present embodiment has high ion conduction when used under an applied electric field, as in a battery.

Since α, β, and γ in the above composition formula affect the lattice defects and the ionic conductivity, it is desirable to use it with α, β, and γ set to be within appropriate ranges. When the values of α, β, and γ are large, the concentration of the defects in the crystal lattice increases, but when the values exceed certain amounts, the concentration of the alkali metal represented by Aa decreases, and the ionic conductivity decreases. Therefore, it is desirable to control α within the range of 0.6<α<2.0, β within the range of 0<β≤1, and γ within the range of 0<γ≤1.

In the present embodiment, a pyrochlore-type oxide represented by "Li_{1.25}La_{0.58}Nb₂O₆F(LLNOF)" or "Li_{1.25}La_{0.58}Ta₂O₆F(LLTOF)" is used as the pyrochlore-type oxide. That is, Li is used as the cation Aa, La is used as the cation Ab, Nb or Ta is used as the cation B, F is used as the anion X, and α is set to 0.75, P to 1, and γ to 1.

The pyrochlore-type oxide of the present embodiment has ionic conductivity of 1×10⁻³ S/cm or higher. In the pyrochlore-type oxide of the present embodiment, ionic conductivity significantly higher than that of other oxide-type solid electrolytes, such as a garnet-type oxide, is obtained.

Next, a method for producing the pyrochlore-type oxide of the present embodiment will be described. In the present embodiment, the LiF of the amorphous phase is also formed simultaneously when the pyrochlore-type oxide is produced. For example, in the process of producing the pyrochlore-type oxide, LiF, which is a raw material for producing the pyrochlore-type oxide, is added in an amount more than necessary, whereby the LiF of the amorphous phase can be formed on the surface of the pyrochlore-type oxide.

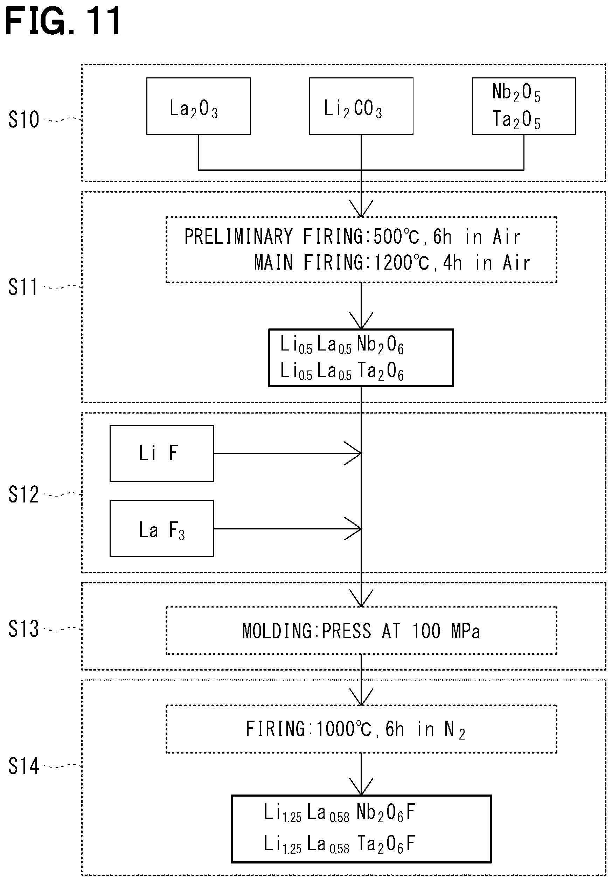

FIG. 11 illustrates a method for producing the pyrochlore-type oxide of the present embodiment. In the method for producing the pyrochlore-type oxide, a first mixing process S10, a first firing process S11, a second mixing process S12, a molding process S13, and a second firing process S14 are sequentially performed.

First, a lanthanum source, a lithium source, and either a niobium source or a tantalum source are prepared as raw materials of the pyrochlore-type oxide, and the first mixing process S10 of mixing them is performed. As the lanthanum source, the lithium source, the niobium source, and the tantalum source, metal oxides, metal carbonates, or the like can be used. In the present embodiment, La₂O₃ is used as the lanthanum source, Li₂CO₃ is used as the lithium source, Nb₂O₅ is used as the niobium source, and Ta₂O₅ is used as the tantalum source. In the first mixing process, La₂O₃, Li₂CO₃, and either Nb₂O₅ or Ta₂O₅ are mixed at a predetermined ratio.

Next, the first firing process S11 of firing the mixture created in the first mixing process is performed. In the first firing process S11, two-stage firing is performed. As the first stage, pre-firing is performed in which the mixture is heated at 500°C for 6 hours in air. With the pre-firing, moisture and the like are removed from the mixture, and the reactivity can be enhanced. The pre-firing is followed by main firing in which the mixture is heated at 1200°C for 4 hours in air. As a result, Li_{0.5}La_{0.5}Nb₂O₆ or Li_{0.5}La_{0.5}Ta₂O₆, which is a precursor of the target product, is obtained.

Next, the second mixing process S12 is performed in which a fluorine source is prepared as the raw material, and it is mixed with the precursor. As the fluorine source, a metal fluoride can be used. In the present embodiment, LiF and LaF₃ are used as the fluorine source. LiF is the fluorine source and a lithium source, and LaF₃ is the fluorine source and a lanthanum source. In the second mixing process, LiF and LaF₃ are mixed with the precursor at predetermined ratios. In the present embodiment, LiF is added in an amount more than necessary for producing the pyrochlore-type oxide.

Next, the molding process S13 is performed in which mixed powder of the precursor, LiF, and LaF₃ is processed into pellets, and the pellets are pressed at 100 MPa. As a result, the mixture of the precursor, LiF, and LaF₃ is molded into pellets.

Next, the second firing process S14 is performed in which the mixture of the precursor, LiF, and LaF₃ is fired. In the second firing process S14, the mixture of the precursor, LiF, and LaF₃ is heated at 1000°C for 6 hours under a nitrogen atmosphere to be fired. In the second firing process S14, firing in a sealed state or firing in a covered state using mother powder may be performed in order to suppress a compositional deviation due to the volatilization of the Li element and the F element.

By cooling the product in the second firing process, a pyrochlore-type oxide represented by the composition formula "Li_{1.25}La_{0.58}Nb₂O₆F" or "Li_{1.25}La_{0.58}Ta₂O₆F" can be obtained. The produced pyrochlore-type oxide is particulate. The outer surface of the pyrochlore-type oxide is covered by LiF, and particles having a core-shell structure having a core phase of the pyrochlore-type oxide and a shell phase of LiF can be obtained.

By controlling the cooling conditions after the second firing process, amorphization of LiF can be promoted. Specifically, the amorphization of LiF can be promoted by increasing the cooling rate of the product, and the volume ratio of the amorphous phase can be increased.

By changing the mixing ratio among La₂O₃, Li₂CO₃, either Nb₂O₅ or Nb₂O₅, LiF, and LaF₃ in the above production process, a pyrochlore-type solid electrolyte represented by "Li_{2-α}La_{(1+α)/3}Nb₂O_{7-β}F_{γ}" or "Li_{2-α}La_{(1+α)/3}Ta₂O_{7-β}F_{γ}" can be obtained. By changing the mixing ratio among La₂O₃, Li₂CO₃, either Nb₂O₅ or Nb₂O₅, LiF, and LaF₃, α, β, and γ of the composition formula can be adjusted. When the firing is performed, a part of the material is sublimated. Therefore, by changing the firing conditions, the firing furnace atmosphere, and the firing furnace size in the first firing process and the second firing process, α, β, and γ can also be adjusted.

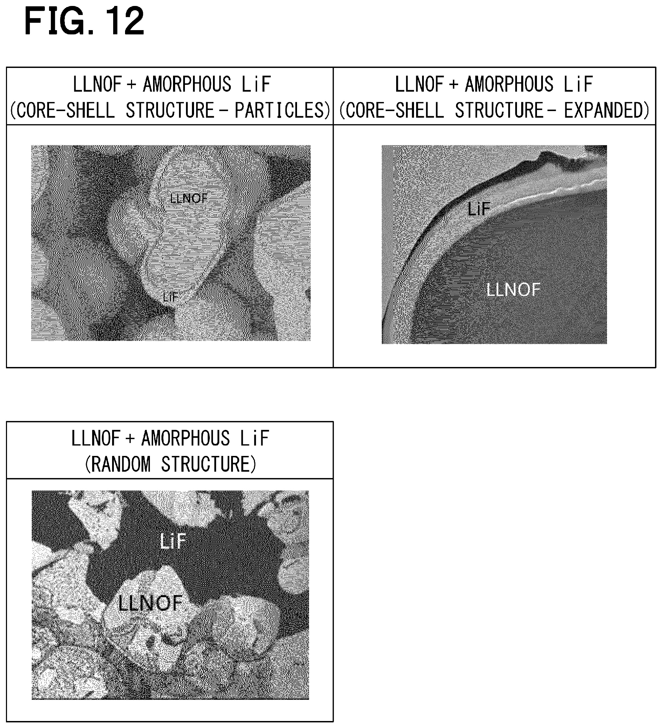

FIG. 12 is SEM images of LLNOF, which is the pyrochlore-type oxide, and amorphous-phase-containing LiF containing an amorphous phase. The upper part in FIG. 12 shows a core-shell structure in which LLNOF is covered by the amorphous-phase-containing LiF. The lower part shows a random structure in which LLNOF and the amorphous-phase-containing LiF are randomly mixed. By the production method of the present embodiment, a composite of LLNOF and the amorphous-phase-containing LiF shown in FIG. 12 is obtained.

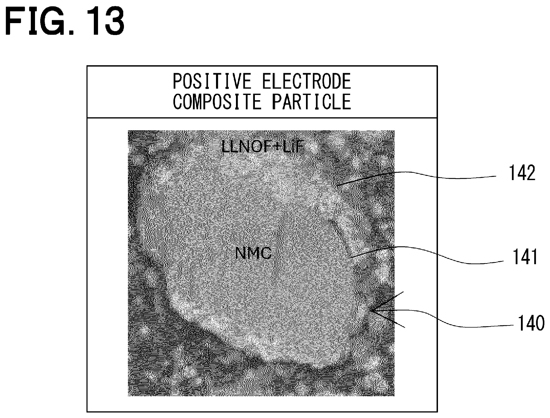

FIG. 13 is an SEM image of the positive electrode composite particles 140. In the example shown in FIG. 13, NMC is used as the positive electrode active substance 141, and the coating layer 142 has a random structure in which LLNOF and the amorphous-phase-containing LiF are randomly mixed.

Next, a method for producing the negative electrode layer 12 using a 3D printer will be described. As a method for producing the negative electrode layer 12 by a 3D printer, for example, a stereolithography method or an extrusion method can be used. When the negative electrode layer 12 is produced, the solid electrolyte layer 15 is used as a substrate, and the negative electrode layer 12 is formed on the solid electrolyte layer 15. In the method for producing the negative electrode layer 12 described below, LLNOF is used as the oxide-based ion conductor, and the amorphous-phase-containing LiF is used as the amorphous-phase-containing ion conductor.

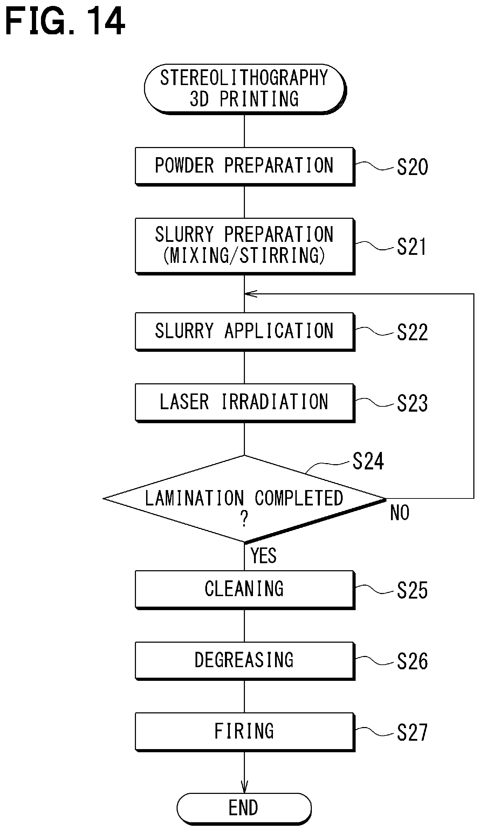

A production method by a stereolithography method will be described with reference to FIG. 14. First, a powder preparation process S20 is performed in which the negative electrode composite particles 120 as the raw material powder of the negative electrode layer 12 are prepared. In the powder preparation process S20, particles having a core-shell structure composed of LLNOF and the amorphous-phase-containing LiF were used as the negative electrode composite particles 120. The average particle size of the negative electrode composite particles 120 was set to 2 µm. The ratios of LLNOF and the amorphous-phase-containing LiF in the negative electrode composite particles 120 were set to 90 vol% and 10 vol%, respectively.

Next, a slurry preparation process S21 is performed. In the slurry preparation process S21, the negative electrode composite particles 120 and an acrylic-based photocurable resin are mixed and stirred to prepare a slurry. The slurry is a suspension in which solid particles are dispersed in a solvent, and is a highly viscous fluid. The ratios of the negative electrode composite particles 120 and the acrylic-based photocurable resin in the slurry were set to 52 vol% and 48 vol%, respectively.

Next, a slurry application process S22 is performed. In the slurry application process S22, the slurry is applied in layers using a 3D printer. In the present embodiment, the film thickness of the slurry is set to 10 µm. The slurry is applied onto the solid electrolyte layer 15. The slurry can be applied in a pattern corresponding to the shape of the negative electrode layer 12 to be molded. The pores of the negative electrode layer 12 may be formed by the pattern of the structure or may be formed using a pore-forming agent. When a pore-forming agent is used, the pore-forming agent may be mixed in the slurry.

Next, a laser irradiation process S23 is performed. In the laser irradiation process S23, the applied slurry is irradiated with ultraviolet rays to cure the photocurable resin. In the present embodiment, the laser diameter of laser irradiation is set to 10 µm. As a result, a layered structure is formed.

Next, in a determination process S24, it is determined whether a predetermined number of layers have been laminated. In the present embodiment, the number of laminated layers is set to four. The slurry application process S22 and the laser irradiation process S23 are repeatedly performed until the predetermined number of layers are laminated. As a result, a laminated structure in which layered structures are laminated is obtained. The processes S22 to S24 are structural molding processes of shaping the laminated structure.

When it is determined in S24 that the lamination has been completed, a cleaning process S25 is performed to remove a portion that has not been cured by the laser irradiation from the laminated structure. In the cleaning process S25, ultrasonic cleaning in various solvents, immersion cleaning, cleaning using suction filtration, and the like can be used. As the solvent used in the cleaning process, a photocurable resin similar to the photocurable resin used for the slurry, ethanol, or the like can be used.

After the cleaning process S25, a pressing process of applying pressure to the laminated structure may be performed. The pressing process can be performed using, for example, a cold isostatic press (CIP) or a hot water isostatic press (WIP).

Next, a degreasing process S26 is performed to remove the photocurable resin after being cured by the laser irradiation from the laminated structure. The degreasing process S26 can be performed by firing the laminated structure at a temperature of, for example, about 600°C.

Next, a firing process S27 is performed. The firing process S27 can be performed by heating the laminated structure at a temperature of, for example, about 1000°C. As a result, the negative electrode layer 12 can be produced. The amorphous-phase-containing LiF contained in the negative electrode composite particles 120 can promote interparticle bonding during sintering, and can densify the negative electrode layer 12 after sintering to form a dense structure. In the firing process S27, firing in a sealed state or firing in a covered state using mother powder may be performed in order to suppress a compositional deviation due to the volatilization of the Li element and the F element.

By performing each of the above processes S20 to S27, the negative electrode layer 12 can be produced using a stereolithography 3D printer. The negative electrode layer 12 is formed on the solid electrolyte layer 15.

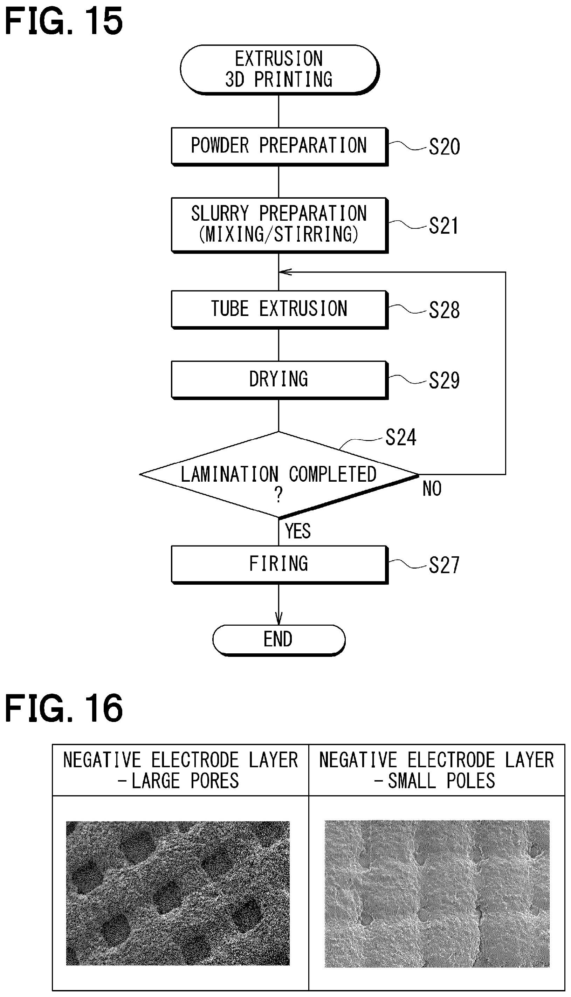

Next, a production method by an extrusion method will be described with reference to FIG. 15. Here, portions different from the stereolithography method in FIG. 14 will be described.

In the extrusion method illustrated in FIG. 15, a slurry is prepared by mixing and stirring the negative electrode composite particles 120, a dispersant, and a binder in a slurry preparation process S21.

Next, a tube extrusion process S28 is performed. In the tube extrusion process S28, the slurry is applied in layers using a 3D printer. The slurry is applied onto the solid electrolyte layer 15. The slurry is applied in a pattern corresponding to the shape of the negative electrode layer 12 to be molded.

Next, a drying process S29 is performed. In the drying process S29, the applied slurry is dried. As a result, a layered structure is formed. In the drying process S29, the applied slurry may be heated.

Then, the tube extrusion process S28 and the drying process S29 are repeatedly performed until it is determined in S24 that a predetermined number of layers are laminated, whereby a laminated structure in which the layered structures are laminated is obtained. S28, S29, and S24 are structural molding processes of shaping the laminated structure.

After the lamination is completed, a firing process S27 is performed. As a result, the negative electrode layer 12 can be produced using an extrusion 3D printer.

FIG. 16 is SEM images of the produced negative electrode layer 12. The negative electrode layer 12 shown in FIG. 16 is molded in a lattice shape. Two negative electrode layers 12 shown in FIG. 16 have different pore sizes. In FIG. 16, the negative electrode layer 12 shown on the left side is formed to have larger pores than those of the negative electrode layer 12 shown on the right side.

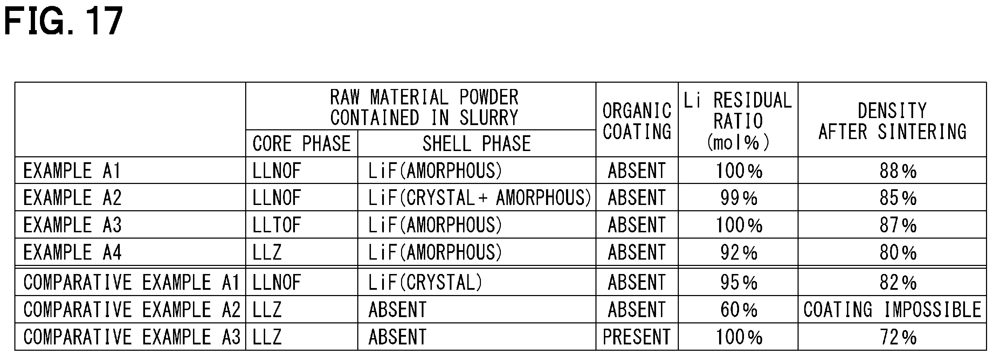

Next, the Li residual ratio and the density after sintering of the structure molded by a stereolithography 3D printer will be described with reference to Examples and Comparative Examples shown in FIG. 17. In Examples A1 to A4 and Comparative Examples A1 to A3, the materials of the core phase 121, the amorphous volume ratios of the shell phase 122, the presence or absence of the shell phase 122, and the presence or absence of the organic coating are differentiated.

The Li residual ratio is a ratio of the amount of lithium contained in the raw material powder after being subjected to the slurry preparation to the amount of lithium contained in the raw material powder before being subjected to the slurry preparation. If the amount of lithium contained in the raw material powder does not change before and after being subjected to the slurry preparation, the Li residual ratio is 100%.

In Examples A1 to A4, raw material powder in which the core phase 121 of an oxide-based ion conductor was covered by the shell phase 122 of an amorphous-phase-containing ion conductor was used. In Comparative Example A1, raw material powder in which the core phase 121 of an oxide-based ion conductor was covered by the shell phase 122 of an ion conductor having 100% crystal phase was used. In Comparative Example A2, raw material powder composed of only an oxide-based ion conductor was used. In Comparative Example A3, raw material powder in which an oxide-based ion conductor was subjected to organic coating was used.

In Example A1, LLNOF was used as the core phase 121, and LiF having 100% amorphous phase was used as the shell phase 122. In Examples A2 to A4 and Comparative Examples A1 to A3, portions different from Example A1 will be described.

In Example A2, LiF having 50% crystal phase and 50% amorphous phase was used as the shell phase 122. In Example A3, LLTOF was used as the core phase 121. In Example A4, LLZ was used as the core phase 121.

In Comparative Example A1, LiF having 100% crystal phase was used as the shell phase 122. In Comparative Example A2, LLZ was used as the core phase 121, and the shell phase 122 was not provided. In Comparative Example A3, LLZ was used as the core phase 121, the shell phase 122 was not provided, and organic coating was provided.

In Examples A1 and A2 and Comparative Example A1, LLNOF was used as the core phase 121. In Example A1, the Li residual ratio was 100%, and the density after sintering was 88%. In Example A2, the Li residual ratio was 99%, and the density after sintering was 85%. In Comparative Example A1, the Li residual ratio was 95%, and the density after sintering was 82%.

In Examples A1 and A2 using the amorphous-phase-containing LiF, the Li residual ratio and the density after sintering were improved more than those of Comparative Example A1 using LiF having 100% crystal phase. Since an amorphous phase has a lower Young's modulus than that of a crystal phase and is structurally disordered, it is considered that, in Examples A1 and A2 using the amorphous-phase-containing LiF, the coverage of the core phase 121 by the shell phase 122 was increased, and elution of lithium ions from the core phase 121 could be suppressed. Furthermore, it is considered that since the amorphous-phase-containing LiF promotes interparticle bonding during sintering, the density after sintering was improved in Examples A1 and A2. In Example A1 in which the volume ratio of the amorphous phase is higher than that of Example A2, the Li residual ratio and the density after sintering were improved more than those of Example A2.

In Example A3, the Li residual ratio was 100%, and the density after sintering was 87%. Also, in Example A3 in which LLTOF was used as the core phase 121, high values were obtained for the Li residual ratio and the density after sintering by using LiF having 100% amorphous phase as the shell phase 122.

In Example A4, the Li residual ratio was 92%, and the density after sintering was 80%. In Comparative Example A2, the Li residual ratio was 60%. In Comparative Example A2, a sintered body could not be obtained because coating was impossible. In Comparative Example A3, the Li residual ratio was 100%, and the density after sintering was 72%.

In Example A4 and Comparative Examples A2 and A3, LLZ was used as the core phase 121. In Comparative Example A2 with only LLZ, the Li residual ratio significantly decreased, and further coating by a 3D printer was not possible. In Comparative Example A3 in which LLZ has been subjected to organic coating, the Li residual ratio was high, but the density after sintering decreased due to the influence of the expansion of the specific surface area by the organic coating. On the other hand, in Example A4 having the shell phase 122 of amorphous LiF, the Li residual ratio was improved more significantly than that of Comparative Example A2. In Example A4, the Li residual ratio was lower than that of Comparative Example A3, but the density after sintering was improved. This is considered to be because LiF having 100% amorphous phase used as the shell phase 122 promoted interparticle bonding during sintering, and the density after sintering was improved.

When Examples A1 and A2 using the pyrochlore-type oxide (LLNOF, LLTOF) as the core phase 121 are compared with Example A4 using the garnet-type oxide (LLZ) as the core phase 121, the Li residual ratio and the density after sintering are higher in Examples A1 and A2 than those of Example A4. This is considered to be because the pyrochlore-type oxide has a lower melting point and a lower Young's modulus than those of the garnet-type oxide, the Li residual ratio and the density after sintering were higher.

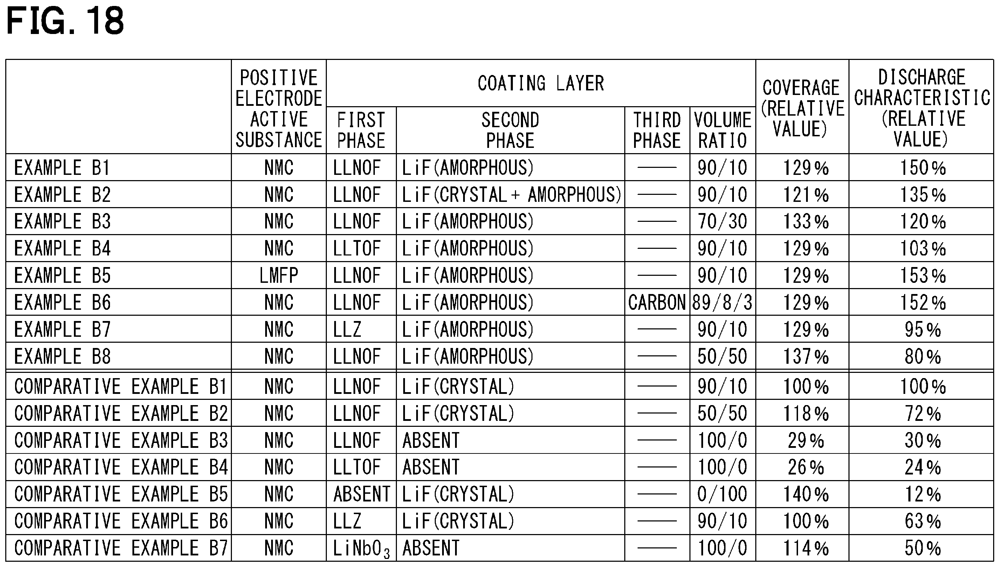

Next, the coverage and the discharge characteristic of the positive electrode composite particles 140 will be described using Examples and Comparative Examples shown in FIG. 18. Examples B1 to B8 and Comparative Examples B1 to B7 are different from each other in the positive electrode active substance 141 or the coating layer 142. The coverage in FIG. 18 is the coverage of the positive electrode active substance 141 by the coating layer 142. The discharge characteristic in FIG. 18 is a discharge time until the secondary battery 10 reaches its lower-limit voltage when discharged at 5C. In FIG. 18, the coverage and the discharge characteristic are presented as relative values, with the values of Comparative Example B1 set to 100%.

In Example B1, NMC was used as the positive electrode active substance 141, LLNOF was used as the first phase 142a of the coating layer 142, LiF having 100% amorphous phase was used as the second phase 142b, and the volume ratios of the first phase 142a and the second phase 142b were 90 vol% and 10 vol%, respectively. For Examples B2 to B8 and Comparative Examples B1 to B7, points different from Example B1 will be described.

In Example B2, LiF having 50% crystal phase and 50% amorphous phase was used as the second phase 142b. In Example B3, the volume ratios of the first phase 142a and the second phase 142b were 70 vol% and 30 vol%, respectively. In Example B4, LLTOF was used as the first phase 142a.

In Example B5, LMFP was used as the positive electrode active substance 141. In Example B6, the third phase 142c composed of carbon was provided in the coating layer 142, and the volume ratios of the first phase 142a, the second phase 142b, and the third phase 142c were 89 vol%, 8 vol%, and 3 vol%, respectively. In Example B7, LLZ was used as the first phase 142a. In Example B8, the volume ratios of the first phase 142a and the second phase 142b were both 50 vol%.

In Comparative Example B1, LiF having 100% crystal phase was used as the second phase 142b. In Comparative Example B2, LiF having 100% crystal phase was used as the second phase 142b, and the volume ratios of the first phase 142a and the second phase 142b were both 50 vol%. In Comparative Example B3, the second phase 142b was not provided. In Comparative Example B4, LLTOF was used as the first phase 142a, and the second phase 142b was not provided.

In Comparative Example B5, the first phase 142a was not provided, and LiF having 100% crystal phase was used as the second phase 142b. In Comparative Example B6, LLZ was used as the first phase 142a, and LiF having 100% crystal phase was used as the second phase 142b. In Comparative Example B7, LiNbO3 was used as the first phase 142a, and the second phase 142b was not provided.

In Examples B1, B2, and B3 and Comparative Example B1, NMC was used for the positive electrode active substance 141, and LLNOF was used for the first phase 142a of the coating layer 142. In Examples B1, B2, and B3 using amorphous-phase-containing LiF as the second phase 142b, the coverage and the discharge characteristic were improved more than those of Comparative Example B1 using LiF having 100% crystal phase. Since an amorphous phase has a lower Young's modulus than that of a crystal phase and the amorphous phase is structurally disordered, it is considered that, in Examples B1, B2, and B3 using the amorphous-phase-containing LiF, the coverage of the positive electrode active substance 141 by the coating layer 142 was increased, and the reaction between the positive electrode active substance 141 and the solid electrolyte could be suppressed.

In Example B4, LLTOF was used as the first phase 142a, but by using the amorphous LiF as the second phase 142b, higher coverage and higher discharge characteristic than those of Comparative Example B1 were obtained.

In Example B5, LMFP was used as the positive electrode active substance 141, but by providing the coating layer 142 composed of LLNOF and LiF having 100% amorphous phase, higher coverage and higher discharge characteristic than those of Comparative Example B1 were obtained.

In Example B6, the discharge characteristic was improved more than that of Example B1. In Example B6, the third phase 142c having electron-conductive property was provided in the coating layer 142, and it is considered that the discharge characteristic was improved by the presence of the third phase 142c.

In Example B7 and Comparative Example B6, NMC was used for the positive electrode active substance 141, and LLZ was used for the first phase 142a of the coating layer 142. In Example B7 using LiF having 100% amorphous phase as the second phase 142b, the coverage and the discharge characteristic were improved more than those of Comparative Example B6 using LiF having 100% crystal phase.

In Example B8 and Comparative Example B2, NMC was used for the positive electrode active substance 141, LLNOF was used for the first phase 142a of the coating layer 142, and the volume ratios of the first phase 142a and the second phase 142b were both 50 vol%. In Example B8 using LiF having 100% amorphous phase as the second phase 142b, the coverage and the discharge characteristic were improved more than those of Comparative Example B2 using LiF having 100% crystal phase.

In Comparative Examples B3 and B4, in which the second phase 142b was not provided, the coverage and the discharge characteristic are significantly lower than those of Comparative Example B1. In Comparative Examples B3 and B4, since the coverage was low, it is considered that the positive electrode active substance 141 reacted with other materials such as the solid electrolyte, the resistance increased, and the discharge characteristics decreased.

In Comparative Example B5 in which the coating layer 142 was composed of only LiF having 100% crystal phase, the coverage was higher than that of Comparative Example B1, but the discharge characteristic significantly decreased. Since LiF has low ion-conductive property, it is considered that the resistance of the coating layer 142 increased and the discharge characteristic decreased.

In Comparative Example B7 using LiNbO3 as the coating layer 142, the coverage was improved more than that of Comparative Example B1, but the discharge characteristic significantly decreased. Since LiNbO3 has low ionic conductivity, it is considered that the resistance of the coating layer 142 increased and the discharge characteristic decreased.

In the present embodiment described above, in the positive electrode composite particle 140 in which the positive electrode active substance 141 is covered by the coating layer 142, the coating layer 142 contains the first phase 142a having high ionic conductivity and the second phase 142b containing an amorphous phase. Since the second phase 142b containing an amorphous phase has a low Young's modulus and is structurally disordered, the contact property between the positive electrode active substance 141 and the coating layer 142 can be improved, and the coverage of the positive electrode active substance 141 by the coating layer 142 can be improved. This makes it possible to improve the ionic conductivity of the coating layer 142 by the first phase 142a having high ionic conductivity while suppressing the positive electrode active substance 141 from reacting with other materials.

In the present embodiment, the amorphous-phase-containing ion conductor of the second phase 142b contained in the coating layer 142 is a material having a lower melting point than that of the first phase 142a. This also makes it possible to improve the contact property between the positive electrode active substance 141 and the first phase 142a. This makes it possible to improve the coverage of the positive electrode active substance 141 by the coating layer 142, and to improve the ionic conductivity of the positive electrode layer 14 while suppressing reactions with other materials.

In the present embodiment, a pyrochlore-type oxide is used as the first phase 142a of the coating layer 142. Since the pyrochlore-type oxide has higher ionic conductivity than those of other oxide-type solid electrolytes, the ionic conductivity of the coating layer 142 can be improved.

In addition, the pyrochlore-type oxide has high oxidation resistance. Therefore, by using the pyrochlore-type oxide for the coating layer 142, both low resistance and high stability during charge-discharge cycling can be achieved.

In the present embodiment, the volume ratio of the first phase 142a is equal to or higher than the volume ratio of the second phase 142b in the coating layer 142 of the positive electrode composite particles 140. As described above, by increasing the volume ratio of the first phase 142a having high ionic conductivity, the ionic conductivity of the coating layer 142 can be improved.

In the present embodiment, a material containing at least Li and F in its composition is used as the second phase 142b of the coating layer 142. This makes it possible to reduce the Young's modulus of the second phase 142b, and to improve the contact property between the positive electrode active substance 141 and the first phase 142a.

In the present embodiment, an ion conductor containing an amorphous phase at least in part is used as the second phase 142b of the coating layer 142, and the volume ratio of the amorphous phase is equal to or higher than the volume ratio of the crystal phase in the second phase 142b. This makes it possible to reduce the Young's modulus of the second phase 142b, and to improve the contact property between the positive electrode active substance 141 and the first phase 142a.

In the present embodiment, the third phase 142c having electron-conductive property can be provided in the coating layer 142. This makes it possible to improve the electron-conductive property of the positive electrode layer 14, and to reduce the conductive additive in the positive electrode layer 14.

In the present embodiment, the solid electrolyte composite 150 containing the first phase 151 composed of an oxide-based ion conductor and the second phase 152 composed of an amorphous-phase-containing ion conductor is used as the solid electrolyte layer 15. The amorphous-phase-containing ion conductor of the second phase 152 is a material that has a lower Young's modulus than that of the first phase 151 and is structurally disordered, and can improve the contact area between the solid electrolyte layer 15 and the electrode layer adjacent to the solid electrolyte layer 15 such as the negative electrode layer 12 and the positive electrode layer 14. This makes it possible to reduce the interface resistance between the solid electrolyte layer 15 and the adjacent electrode layer, and to improve ionic conductivity.

In the present embodiment, a pyrochlore-type oxide is used as the first phase 151 of the solid electrolyte composite 150. The pyrochlore-type oxide has higher ionic conductivity than those of other oxide-type solid electrolytes, and the solid electrolyte composite 150 contains the pyrochlore-type oxide, so that the ionic conductivity of the solid electrolyte layer 15 can be improved.

In the present embodiment, a material containing at least Li and F in its composition is used as the second phase 152 of the solid electrolyte composite 150. This makes it possible to reduce the Young's modulus of the second phase 152, and to improve the contact area between the solid electrolyte layer 15 and the adjacent electrode layer. This makes it possible to reduce the interface resistance between the solid electrolyte layer 15 and the adjacent electrode layer, and to improve ionic conductivity.

In the present embodiment, the negative electrode layer 12 is produced using the slurry containing the negative electrode composite particles 120. The negative electrode composite particle 120 contains the core phase 121 composed of an oxide-based ion conductor and a shell phase 122 composed of an amorphous-phase-containing ion conductor containing an amorphous phase at least in part. The amorphous-phase-containing ion conductor of the shell phase 122 is a material that has a lower Young's modulus than that of the core phase 121 and is structurally disordered, and can improve the coverage of the core phase 121 by the shell phase 122. This makes it possible to suppress the oxide-based ion conductor of the negative electrode composite particle 120 from reacting with the solvent in the slurry, and to suppress elution of lithium ions as conducting ions from the oxide-based ion conductor.

The amorphous-phase-containing LiF contained in the shell phase 122 can promote interparticle bonding during sintering, and can densify the negative electrode layer 12 after sintering to form a dense structure. As a result, when lithium metal is precipitated in the negative electrode layer 12, a short circuit due to precipitation of lithium metal inside the structure can be suppressed.

In the present embodiment, a pyrochlore-type oxide is used as the core phase 121 of the negative electrode composite particle 120. The pyrochlore-type oxide has higher ionic conductivity than those of other oxide-type solid electrolytes, and the negative electrode composite particle 120 contains the pyrochlore-type oxide, so that the ionic conductivity of the negative electrode layer 12 can be improved. Furthermore, in the pyrochlore-type oxide, lithium ions are less likely to be eluted than those in other oxides such as the garnet-type oxide. Therefore, by using the pyrochlore-type oxide as the oxide-based ion conductor of the core phase 121, elution of lithium ions can be effectively suppressed.

In the present embodiment, a material containing at least Li and F in its composition is used as the shell phase 122 of the negative electrode composite particle 120. This makes it possible to reduce the Young's modulus of the shell phase 122, and to improve the coverage of the core phase 121 by the shell phase 122. This makes it possible to suppress elution of lithium ions as conducting ions from the oxide-based ion conductor of the negative electrode composite particle 120.

In the present embodiment, an ion conductor containing an amorphous phase at least in part is used as the shell phase 122 of the negative electrode composite particle 120, and in the shell phase 122, the volume ratio of the amorphous phase is set to be equal to or higher than the volume ratio of the crystal phase. This makes it possible to reduce the Young's modulus of the shell phase 122, and to improve the coverage of the core phase 121 by the shell phase 122.

In the present embodiment, the volume ratio of the core phase 121 in the negative electrode composite particle 120 is set to be equal to or higher than the volume ratio of the shell phase 122. Since the constituent material of the shell phase 122 has a higher ionic conductivity value than that of the constituent material of the core phase 121, the ionic conductivity value of the negative electrode composite particle 120 can be increased by increasing the volume ratio of the core phase 121 in the negative electrode composite particle 120.

In the present embodiment, the negative electrode layer 12 is produced from the slurry using a 3D printer. As a result, the negative electrode layer 12 having an ordered porous structure in which pores are regularly formed can be easily produced.

In the present embodiment, the negative electrode layer 12 is produced using a stereolithography 3D printer that cures a photocurable resin by laser irradiation. The photocurable resin easily reacts with the oxide-based ion conductor in the slurry. Therefore, by using the negative electrode composite particles 120 in which the core phase 121 composed of the oxide-based ion conductor is covered by the shell phase 122 composed of the amorphous-phase-containing ion conductor, elution of lithium ions as conducting ions from the oxide-based ion conductor, due to the reaction between the oxide-based ion conductor of the core phase 121 and the photocurable resin, can be suppressed.

In the present embodiment, the solid component ratio of the slurry is set to be within the range of 30 to 60 vol%. This makes it possible to reliably disperse the negative electrode composite particles 120 into a slurry, and to increase the density of the negative electrode layer 12 after sintering.

In the present embodiment, a light absorbing material can be contained in the slurry. When the light absorbing material is contained in the slurry, scattering of laser light, possibly occurring when the slurry is irradiated with laser by a 3D printer, can be suppressed. Therefore, the intended build width can be achieved by a stereolithography 3D printer, and building can be performed with high accuracy.

### (Second Embodiment)

Next, a second embodiment of the present disclosure will be described. Hereinafter, portions different from the first embodiment will only be described.

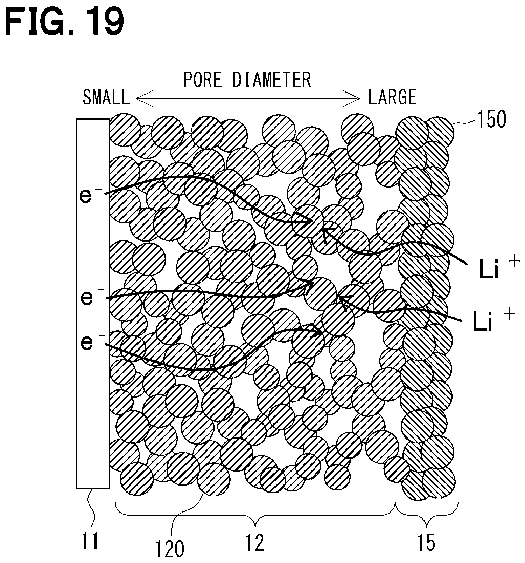

As illustrated in FIG. 19, a negative electrode layer 12 of the second embodiment has a pore distribution in which the porosity varies from the side closer to a solid electrolyte layer 15 toward the side farther away, and the porosity becomes higher toward the solid electrolyte layer 15. In the negative electrode layer 12, the porosity on the side farther from the solid electrolyte layer 15 (i.e., the side closer to a negative electrode current collector 11) is low, and the porosity on the side closer to the solid electrolyte layer 15 is high.

In the negative electrode layer 12 in the example illustrated in FIG. 19, the pore diameter on the side farther from the solid electrolyte layer 15 is small, and the pore diameter on the side closer to the solid electrolyte layer 15 is large. When the pore diameter of the negative electrode layer 12 is uniform, the number of pores on the side closer to the solid electrolyte layer 15 is set to be larger than the number of pores on the side farther from the solid electrolyte layer 15, whereby the porosity on the side closer to the solid electrolyte layer 15 can be increased. FIG. 19 illustrates an example in which pores of the negative electrode layer 12 are irregularly formed using a pore-forming agent.

In the negative electrode layer 12, the conduction velocity of electrons is higher than that of lithium ions. Therefore, in the negative electrode layer 12, lithium metal is preferentially precipitated from the pores on the side closer to the solid electrolyte layer 15. When the pores of the negative electrode layer 12 on the side closer to the solid electrolyte layer 15 are filled with lithium metal, lithium metal precipitation in the pores of the negative electrode layer 12 on the side farther from the solid electrolyte layer 15 and lithium metal precipitation in the solid electrolyte layer 15 occur competitively. When lithium metal precipitation occurs in the solid electrolyte layer 15, a short circuit may occur.

On the other hand, by increasing the pore diameter in the negative electrode layer 12 on the side closer to the solid electrolyte layer 15 to increase the porosity, the pores on the side closer to the solid electrolyte layer 15 are less likely to be filled with lithium metal. Therefore, lithium metal can be precipitated as uniformly as possible in all the pores from the side of the negative electrode layer 12 closer to the solid electrolyte layer 15 to the side farther from the solid electrolyte layer 15.

When the porosity of the negative electrode layer 12 on the side closer to the solid electrolyte layer 15 is increased, the contact property between the negative electrode layer 12 and the solid electrolyte layer 15 may decrease. On the other hand, in the solid electrolyte layer 15 of the second embodiment, the solid electrolyte composite 150 containing a second phase 152 of the amorphous-phase-containing LiF is used, and the contact property between the negative electrode layer 12 and the solid electrolyte layer 15 can be improved. As a result, even when the porosity of the negative electrode layer 12 on the side closer to the solid electrolyte layer 15 is increased, it is possible to suppress a decrease in the contact property between the negative electrode layer 12 and the solid electrolyte layer 15.

In the pore distribution of the negative electrode layer 12, it is sufficient that the porosity increases from the side farther from the solid electrolyte layer 15 toward the side closer to the solid electrolyte layer 15, and the porosity may vary continuously or may vary stepwise. In order to precipitate lithium metal as uniformly as possible in the pores in the entire negative electrode layer 12, it is desirable that the porosity varies continuously. On the other hand, when the negative electrode layer 12 is produced by, for example, a 3D printer, the material is laminated into a plurality of layers, so that the porosity is fixed for each layer. Therefore, a structure in which the porosity of the negative electrode layer 12 varies stepwise has the advantage of being easier to produce.

### (Third Embodiment)

Next, a third embodiment of the present disclosure will be described. Hereinafter, portions different from the above respective embodiments will only be described.

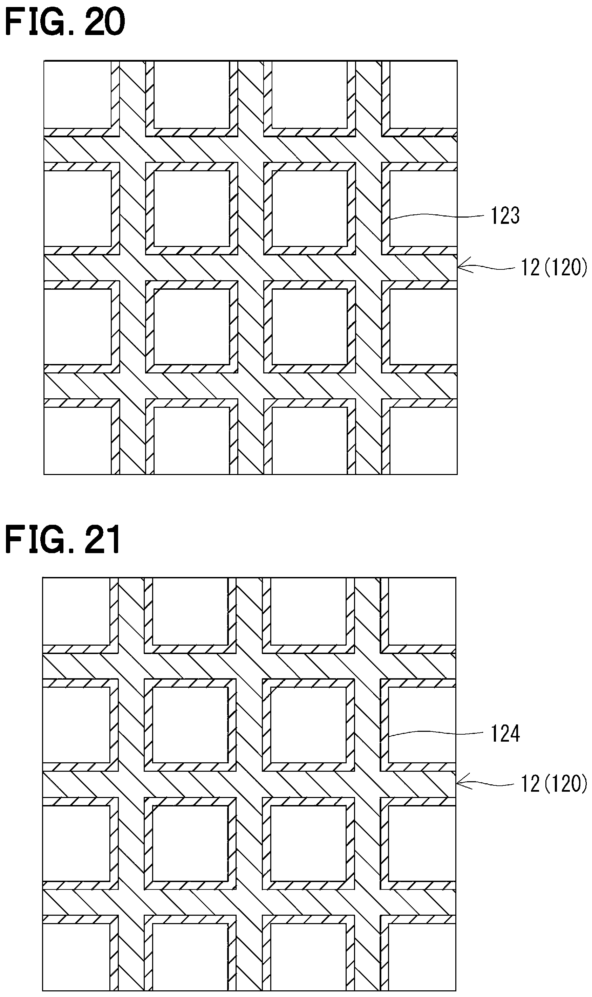

FIG. 20 illustrates a partially enlarged cross section of a negative electrode layer 12 of the third embodiment. As illustrated in FIG. 20, an electron conducting layer 123 having electron-conductive property is formed on the surface of the negative electrode layer 12. The electron conducting layer 123 is provided on the inner surfaces of the pores of the negative electrode layer 12. The electron conducting layer 123 can be formed by coating, for example, a carbon material such as carbon black.

By providing the electron conducting layer 123 on the surface of the negative electrode layer 12, the electron-conductive property of the negative electrode layer 12 can be improved, and the precipitation of lithium metal in the negative electrode layer 12 can be promoted. In addition, by providing the electron conducting layer 123 on the surface of the negative electrode layer 12, the conductive additive in the negative electrode layer 12 can be reduced.

### (Fourth Embodiment)

Next, a fourth embodiment of the present disclosure will be described. Hereinafter, portions different from the above respective embodiments will only be described.

FIG. 21 illustrates a partially enlarged cross section of a negative electrode layer 12 of the fourth embodiment. In the fourth embodiment, the negative electrode layer 12 contains an ion-electron conducting phase 124, as illustrated in FIG. 21. The ion-electron conducting phase 124 is made of a material having ion-conductive property and electron-conductive property. The ion-electron conducting phase 124 is obtained, for example, by imparting electron-conductive property to a pyrochlore-type oxide used as the core phase 121 of the negative electrode composite particle 120. For example, by subjecting the pyrochlore-type oxide having ion-conductive property to a reduction treatment, electron-conductive property can be imparted to the pyrochlore-type oxide in addition to ion-conductive property. A metal that forms an alloy with Li, such as Ag, Au, Sn, or In, can also be used as the ion-electron conducting phase 124.

Since the negative electrode layer 12 contains the ion-electron conducting phase 124, the ion-conductive property and the electron-conductive property of the negative electrode layer 12 can be improved, and lithium metal precipitation in the negative electrode layer 12 can be promoted. Since the negative electrode layer 12 contains the ion-electron conducting phase 124, the conductive additive in the negative electrode layer 12 can also be reduced.

### (Fifth Embodiment)

Next, a fifth embodiment of the present disclosure will be described. Hereinafter, portions different from the above respective embodiments will only be described.

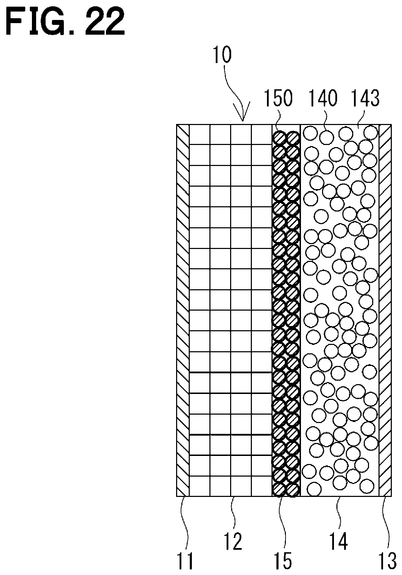

In the fifth embodiment, a solid electrolyte composite 143 is contained in a positive electrode layer 14, as illustrated in FIG. 22. The solid electrolyte composite 143 in the positive electrode layer 14 can be formed to have the same configuration as a solid electrolyte composite 150 in a solid electrolyte layer 15. Furthermore, the positive electrode layer 14 may contain an electrolyte solution and a polymer.

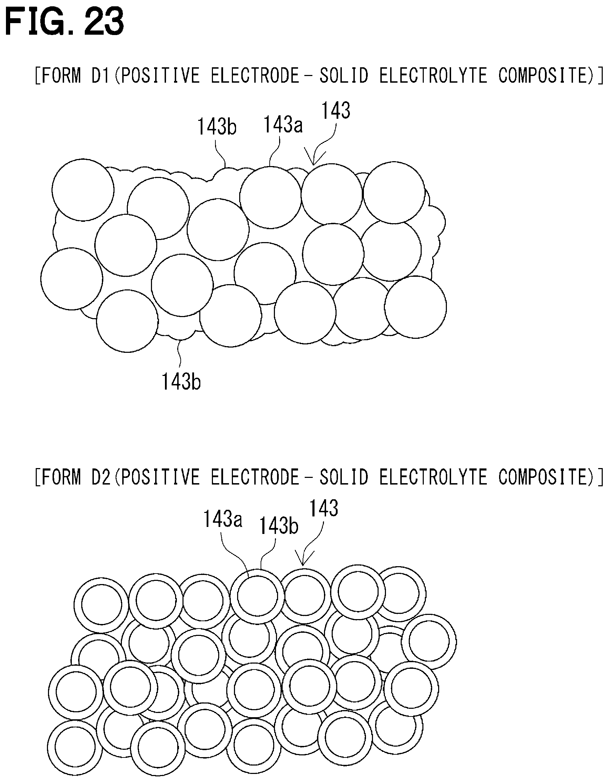

As illustrated in FIG. 23, the solid electrolyte composite 143 provided in the positive electrode layer 14 is a composite having a plurality of phases containing at least a first phase 143a and a second phase 143b, and can also be referred to as a positive electrode composite. In the solid electrolyte composite 143 provided in the positive electrode layer 14, the first phase 143a is an oxide-based ion conductor, and the second phase 143b is an amorphous-phase-containing ion conductor containing an amorphous phase at least in part. The constituent material of the second phase 143b has a lower melting point and a lower Young's modulus than those of the constituent material of the first phase 143a.

The solid electrolyte composite 143 provided in the positive electrode layer 14 may have a random configuration in which the first phases 143a and the second phases 143b are randomly provided as illustrated in a form D1 in FIG. 23, or may have a core-shell structure in which the first phase 143a is defined as a core phase and the second phase 143b is defined as a shell phase as illustrated in a form D2 in FIG. 23.

As the oxide-based ion conductor of the first phase 143a, a pyrochlore-type oxide can be used, and, for example, LLNOF or LLTOF can be used. As the amorphous-phase-containing ion conductor of the second phase 143b, an amorphous-phase-containing LiF containing an amorphous phase can be used. In the amorphous-phase-containing LiF of the second phase 143b, the volume ratio of the amorphous phase is desirably equal to or higher than the volume ratio of the crystal phase.

As described above, by providing the solid electrolyte composite containing the first phase 143a composed of an oxide-based ion conductor and the second phase 143b composed of an amorphous-phase-containing ion conductor in the positive electrode layer 14, the ionic conductivity of the positive electrode layer 14 can be improved.

Since the solid electrolyte composite provided in the positive electrode layer 14 contains the second phase 143b composed of an amorphous-phase-containing ion conductor, the contact property between the positive electrode layer 14 and the solid electrolyte layer 15 can be improved, and interface resistance can be reduced.

The present disclosure is not limited to the above-described embodiments, and can be variously modified as follows without departing from the gist of the present disclosure. The means disclosed in the above respective embodiments may be appropriately combined within a feasible range.

For example, in each of the above embodiments, an example has been described in which the present disclosure is applied to a lithium ion battery in which conducting ions are lithium ions. However, the present disclosure may be applied to a secondary battery in which conducting ions are different. Specifically, the present disclosure can be applied to a potassium ion battery in which potassium ions conduct, a sodium ion battery in which sodium ions conduct, and the like.

In the first embodiment, an example has been described in which the positive electrode composite particles 140 are combined with the solid electrolyte layer 15 composed of an oxide-based solid electrolyte (pyrochlore-type oxide, garnet-type oxide). However, the positive electrode composite particles 140 may be combined with the solid electrolyte layer 15 composed of a sulfide-based solid electrolyte.

In the first embodiment, an example has been described in which the ceramic composite particles are applied to the positive electrode composite particles 140 and the positive electrode active substance 141 is used as the ceramic particles that undergo a redox reaction. However, a material other than the positive electrode active substance 141 may be used as the ceramic particles. For example, in the case of a secondary battery containing a negative electrode active substance, the negative electrode active substance is used as the ceramic particles, so that ceramic composite particles in which the negative electrode active substance is covered by a coating layer can be formed. In the case of a solid oxide electrolysis cell (SOEC) having an electrode active substance, the electrode active substance is used as the ceramic particles, so that ceramic composite particles in which the electrode active substance is covered by a coating layer can be formed.

In each of the above embodiments, an example has been described in which the secondary battery 10 is defined as an anode-free battery in which a negative electrode active substance is not provided in the initial state. However, a configuration may be adopted in which a negative electrode active substance is provided in the negative electrode layer 12 in the initial state. When the negative electrode layer 12 is configured to include the negative electrode active substance in the initial state, it is not necessary for the negative electrode layer 12 to be porous. As the negative electrode active substance, an oxide-based negative electrode active substance (e.g., Li₄Ti₅O₁₂, TiO₂(B), TiNb₂O₇), Li metal, or the like can be used. When the negative electrode layer 12 is a porous body, the Li metal may be deposited on the surface of the porous body.

In the above fifth embodiment, an example has been described in which the solid electrolyte composite is provided in the positive electrode layer 14. However, the solid electrolyte composite may be provided in the negative electrode layer 12.

In the first embodiment, an example has been described in which the negative electrode layer 12 is molded using the slurry containing the composite particles composed of the core phase and the shell phase. However, an ion-conductive structure other than the negative electrode layer 12 may be molded using the slurry containing the composite particles.

In each of the above embodiments, an example has been described in which the negative electrode layer 12 and the like of the secondary battery 10 are produced by a wet process using a slurry in which particles are dispersed in a solvent. Without being limited thereto, however, the secondary battery 10 may be produced by a dry process using no solvent.

The secondary battery 10 described in each of the above embodiments may be configured as a bipolar battery. The bipolar battery has a structure in which a plurality of battery cells are stacked and connected in series, and adjacent battery cells share a current collector. That is, the current collector in contact with the positive electrode of one adjacent battery cell is in contact with the negative electrode of the other adjacent battery cell.

In each of the above embodiments, an example has been described in which the positive electrode composite particles 140 are applied to the secondary battery 10, which is an all-solid-state battery provided with the solid electrolyte layer 15. However, the positive electrode composite particles 140 may be applied to a liquid-type secondary battery including an electrolyte layer provided with a separator and an electrolyte solution. As the electrolyte solution, for example, ethylene carbonate or an ionic liquid can be used. As the separator, for example, a porous body can be used. In the liquid-type secondary battery, the separator, the electrolyte solution, and a polymer may be provided in the electrolyte layer. The electrolyte layer may be composed of a polymer layer without providing the separator.

Features of a ceramic composite particle and a secondary battery disclosed in the present specification will be described below.

### (Feature 1)

A ceramic composite particle includes a ceramic particle (141) and a coating layer (142) that covers at least a part of a surface of the ceramic particle and contains two or more phases. The coating layer contains a first phase (142a) composed of an oxide-based ion conductor and a second phase (142b) composed of an amorphous-phase-containing ion conductor containing an amorphous phase. The first phase has an ionic conductivity higher than an ionic conductivity of the second phase. The second phase has a Young's modulus lower than a Young's modulus of the first phase.

### (Feature 2)

In the ceramic composite particle according to feature 1, the ceramic particle is a positive electrode active substance of a secondary battery.

### (Feature 3)

In the ceramic composite particle according to feature 1 or 2, the oxide-based ion conductor is a pyrochlore-type oxide.

### (Feature 4)

In the ceramic composite particle according to feature 3, a composition formula of the pyrochlore-type oxide is Aa_{2-α}Ab_{(1+α)/3}B₂O_{7-β}X_{γ}, where Aa is an alkali metal, Ab contains at least a lanthanoid, B is a cation different from Aa and Ab, and X is an anion substitutable for an O atom constituting the pyrochlore-type oxide, and in the composition formula, α falls within a range of 0.6<α<2.0, β falls within a range of 0<β≤1, and γ falls within a range of 0<γ≤ 1, and the pyrochlore-type oxide has a defective structure.

### (Feature 5)

In the ceramic composite particle according to any one of features 1 to 4, in the coating layer, a volume ratio of the first phase is equal to or higher than a volume ratio of the second phase.

### (Feature 6)

In the ceramic composite particle according to any one of features 1 to 5, the amorphous-phase-containing ion conductor contains at least Li and F in its composition.

### (Feature 7)

In the ceramic composite particle according to any one of features 1 to 6, the amorphous-phase-containing ion conductor contains a crystal phase and an amorphous phase, and a volume ratio of the amorphous phase is equal to or higher than a volume ratio of the crystal phase.

### (Feature 8)

In the ceramic composite particle according to any one of features 1 to 7, the coating layer contains a third phase (142c) having electron-conductive property.

### (Feature 9)

In the ceramic composite particle according to feature 1, the oxide-based ion conductor contains at least one of a pyrochlore-type oxide and a garnet-type oxide, and the amorphous-phase-containing ion conductor contains at least Li and F in its composition.

### (Feature 10)

A secondary battery includes a positive electrode (14) using the ceramic particle according to any one of features 1 to 9 as a positive electrode active substance.

Although the present disclosure has been described in accordance with examples, it is understood that the present disclosure is not limited to the examples and structures. The present disclosure also includes various modifications and modifications within the equivalent range. In addition, although various combinations and forms are shown in the present disclosure, other combinations and forms including only one element, more elements, or less elements are also within the scope and idea of the present disclosure.

## Claims

1. A ceramic composite particle comprising:
a ceramic particle (141); and
a coating layer (142) that covers at least a part of a surface of the ceramic particle and contains two or more phases, wherein
the coating layer contains a first phase (142a) composed of an oxide-based ion conductor and a second phase (142b) composed of an amorphous-phase-containing ion conductor containing an amorphous phase,
the first phase has an ionic conductivity higher than an ionic conductivity of the second phase, and
the second phase has a Young's modulus lower than a Young's modulus of the first phase.

2. The ceramic composite particle according to claim 1, wherein the ceramic particle is a positive electrode active substance of a secondary battery.

3. The ceramic composite particle according to claim 1, wherein the oxide-based ion conductor is a pyrochlore-type oxide.

4. The ceramic composite particle according to claim 3, wherein
a composition formula of the pyrochlore-type oxide is Aa_{2-α}Ab_{(1+α)/3}B₂O_{7-β}X_{γ},
where Aa is an alkali metal, Ab contains at least a lanthanoid, B is a cation different from Aa and Ab, and X is an anion substitutable for an O atom constituting the pyrochlore-type oxide, and in the composition formula, α falls within a range of 0.6<α<2.0, β falls within a range of 0<β≤1, and γ falls within a range of 0<γ≤ 1, and the pyrochlore-type oxide has a defective structure.

5. The ceramic composite particle according to claim 1, wherein in the coating layer, a volume ratio of the first phase is equal to or higher than a volume ratio of the second phase.

6. The ceramic composite particle according to claim 1, wherein the amorphous-phase-containing ion conductor contains at least Li and F in its composition.

7. The ceramic composite particle according to claim 1, wherein the amorphous-phase-containing ion conductor contains a crystal phase and the amorphous phase, and a volume ratio of the amorphous phase is equal to or higher than a volume ratio of the crystal phase.

8. The ceramic composite particle according to claim 1, wherein the coating layer contains a third phase (142c) having electron-conductive property.

9. The ceramic composite particle according to claim 1, wherein
the oxide-based ion conductor contains at least one of a pyrochlore-type oxide and a garnet-type oxide, and
the amorphous-phase-containing ion conductor contains at least Li and F in its composition.

10. A secondary battery comprising a positive electrode (14) using the ceramic composite particle according to any one of claims 1 to 9 as a positive electrode active substance.
